(19) Europäisches Patentamt
European Patent Office
Office européen des brevets

(11) EP 3 699 218 A1

(12) EUROPÄISCHE PATENTANMELDUNG

(43) Veröffentlichungstag:
**26.08.2020 Patentblatt 2020/35**

(21) Anmeldenummer: **19158883.9**

(22) Anmeldetag: **22.02.2019**

(51) Int Cl.:
***C08G 18/72*** (2006.01) ***C08G 18/73*** (2006.01)
***C08G 18/75*** (2006.01) ***C08G 18/79*** (2006.01)
***C08G 18/38*** (2006.01) ***C09D 175/02*** (2006.01)
***C08K 3/22*** (2006.01) ***C08K 3/013*** (2018.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

# (54) NEUE ZWEIKOMPONENTEN-DECKBESCHICHTUNGSSYSTEME ENTHALTEND POLYASPARAGINSÄUREESTER

(57) Die vorliegende Erfindung betrifft Zweikomponenten-Deckbeschichtungssystemen enthaltend Polyasparaginsäureester mit nur geringen Mengen an Fumarsäuredialkylester, ein Verfahren zu deren Herstellung und deren Einsatz zur Herstellung von Beschichtungen, im Besonderen für den Korrosionschutz, sowie zur Verwendung im Bereich der allgemeinen Industrielackierung oder im Bereich ACE (Agriculture, Construction and Earth moving equipment) und damit beschichtete Substrate.

EP 3 699 218 A1

## Beschreibung

Die vorliegende Erfindung betrifft Zweikomponenten-Deckbeschichtungssysteme enthaltend Polyasparaginsäureester mit nur geringen Mengen an Fumarsäuredialkylester, ein Verfahren zu deren Herstellung und deren Einsatz zur Herstellung von Beschichtungen, im Besonderen für den Korrosionschutz, sowie zur Verwendung im Bereich ACE (Agriculture, Construction and Earth moving equipment) und damit beschichtete Substrate.

Zweikomponenten (2K)-Beschichtungsmittel, die als Bindemittel eine Polyisocyanatkomponente in Kombination mit einer gegenüber Isocyanatgruppen reaktionsfähigen Reaktivkomponente, insbesondere einer Polyhydroxylkomponente enthalten, sind seit langem bekannt. Sie eignen sich zur Herstellung von hochwertigen Überzügen, die hart, elastisch, abrieb- und lösemittelbeständig und vor allem auch witterungsstabil eingestellt werden können.

Innerhalb dieser 2K-Polyurethan-Beschichtungstechnologie haben sich in letzter Zeit bestimmte, estergruppenhaltige, sekundäre Polyamine etabliert, die sogenannten Polyasparaginsäureester oder Polyaspartate, die sich in Kombination mit Lackpolyisocyanaten insbesondere als Bindemittel in lösemittelarmen oder -freien (high solids) Beschichtungsmitteln eignen und eine rasche Aushärtung der Beschichtungen bei niedrigen Temperaturenermöglichen.

Die Verwendung solcher Polyasparaginsäureester in Deckbeschichtungen ermöglicht, neben der erwähnten schnellen Aushärtung dieser Beschichtungen, einen reduzierten Schichtaufbau, was für die Anwendung im Bereich der Deckbeschichtungen sehr attraktiv ist. Im Bereich Korrosionsschutz und ACE (Agriculture, Construction and Earth moving equipment) konnten sich jedoch die herkömmlichen Polyaspartat-basierten Deckbeschichtungen wegen ihres Glanzverlusts bislang nicht etablieren. Im Markt besteht daher seit langem ein Wunsch nach pigmentierten Deckbeschichtungen auf Polyaspartat-Basis, die eine verbesserte Glanzstabilität aufweisen.

Die Verwendung von Polyasparaginsäureestern allein oder in einem Gemisch mit weiteren, gegenüber Isocyanatgruppen reaktionsfähigen Komponenten in 2K-Beschichtungsmitteln wird beispielsweise in der EP0403921, EP0639628, EP0667362, EP0689881, US5214086, EP0699696, EP0596360, EP0893458, DE19701835, EP0470461, WO15130501, WO15130502 und US5243012 beschrieben.

Die Herstellung von aminofunktionellen Asparaginsäureestern ist an sich bekannt. Die Synthese erfolgt über eine Addition von primären Polyaminen an eine aktivierte Kohlenstoff-Doppelbindung vinyloger Carbonylverbindungen, wie beispielsweise in Malein- oder Fumarsäureestern enthalten, die in der Literatur hinreichend beschrieben ist (Hauben Weyl, Meth. d. Org. Chemie Bd. 11/1, 272 (1957), Usp. Khim. 1969, 38, 1933). Bei dieser Reaktion kann es zur Bildung eines Polyasparaginsäureester mit primären Aminogruppen als Nebenprodukt kommen, wenn nur eine Aminogruppe des Polyamins mit der Doppelbindung der vinylogen Carbonylverbindungen reagiert hat. In den kommerziell erhältlichen Polyasparaginsäureestern wird Maleinsäureester als die vinyloge Carbonylverbindung eingesetzt. Während der Herstellung eines Polyasparaginsäureester auf Basis von Maleinsäureester kann eine retro-Michael Addition als eine weitere unerwünschte Nebenreaktion erfolgen, bei der durch Eliminierung des Polyamins als Nebenkomponente Fumarsäuredialkylester gebildet wird. Ein typisches Herstellverfahren eines Polyasparaginsäureesters erfordert daher eine Lagerzeit von 4-6 Wochen nachdem der Hauptteil der Edukte miteinander reagiert hat. In dieser Zeit erfolgt die sogenannte Reifung des Produktes, welche sich durch Stabilisierung der Viskosität manifestiert. Dadurch, dass der Umsatz innerhalb dieser Zeit weiter steigt, sinkt auch der Gehalt an Fumarsäuredialkylester. Diese Lagerung über mehrere Wochen führt zu erheblichen Logistik-Kosten innerhalb der Produktion. Obwohl das Produkt erst nach der Lagerung an den Kunden ausgeliefert wird, enthält es immer noch substantielle Mengen Fumarsäuredialkylester welches eine starke Sensibilisierung verursachen kann. Die so hergestellten Polyasparaginsäureester enthalten nach der Reifung üblicherweise noch Reste von 3 bis 20 Gewichtsprozent an Fumarsäureester.

Die Aufgabe der vorliegenden Erfindung bestand in der Bereitstellung einer Beschichtungszusammensetzung auf Polyasparaginsäureesterbasis zur Herstellung von Glanz-stabilen pigmentierten Deckbeschichtungen.

Überaschend wurde gefunden, dass diese Aufgabe durch Beschichtungszusammensetzungen auf Polyasparaginsäureesterbasis mit einem stark reduzierten Gehalt an Fumarsäuredialkylester gelöst werden kann. Der Gehalt an Fumarsäuredialkylester in der Polyasparaginsäureesterkomponente liegt erfindungsgemäß bei 0,01 bis 1,2 Gew.-%, bevorzugt 0,01 bis 1 Gew.-%, besonders bevorzugt 0,01 bis 0,1 Gew-% und kann durch ein spezielles Destillationsverfahren auf diese Werte reduziert werden.

Eine theoretische Möglichkeit des destillativen Aufarbeitens von Polyasparaginsäureestern ist z.B. in der EP0403921 erwähnt. Diese Offenbarung gibt keine Beispiele und auch kein Verfahren zur Destillation an. Darüberhinaus gibt es in der EP0403921 keinen Hinweis darauf, Polyasparaginsäureestern mit einem Gehalt an Fumarsäuredialkylester von maximal 1,2 Gewichts-% gerade bei der Herstellung von pigmentierten Deckbeschichtungen zu verwenden, noch weniger darauf, dass dies zu einer Verbesserung der Glanzstabilität dieser Beschichtungen führt. DE102006002153 beschreibt in Vergleichsbeispiel III ebenfalls einen Polyasparaginsäureester, welcher destillativ von Fumarsäuredialkylester befreit wird. Auch hier wird die Verwendung von Polyasparaginsäureestern mit einem erfindungsgemäß reduzierten Gehalt an Fumarsäuredialkylester zur Herstellung von pigmentierten Deckbeschichtungen oder dem dadurch erzielbaren Effekt weder erwähnt, noch nahegelegt.

WO2018/074884 und WO2018/074885, welche zum Zeitpunkt der Anmeldung der vorliegenden Erfindung zum

Patent noch nicht veröffentlicht waren, beschreiben ebenfalls die Destillation von Polyasparaginsäureestern, WO2018074884 auch deren Verwendung in Beschichtungsmitteln. Keines der beiden Dokumente beschreibt pigmentierte Deckbeschichtungen auf Basis dieser aufgereinigten Ester.

Gegenstand der vorliegenden Erfindung sind zweikomponentige Beschichtungszusammensetzungen (2K-Beschichtungsmittel), enthaltend

a) mindestens eine Polyasparaginsaureester-haltige Komponente A,
b) mindestens eine Polyisocyanatkomponente B
c) gegebenenfalls eine oder mehrere, von A verschiedene, gegenüber Isocyanatgruppen reaktionsfähige Komponenten C,
d) mindestens ein anorganisches und/oder organisches Pigment, bevorzugt in einem Anteil von mindestens 3 Gewichts-% (≥ 3 Gewichts-%), bezogen auf das Gesamtgewicht der zweikomponentigen Zusammen-setzung, (Komponente D1), und
gegebenenfalls weitere Hilfs- und Zusatzstoffe (Komponente D2).

Im Rahmen der vorliegenden Erfindung sind Polyasparaginsaureester-haltige Komponenten A Zusammensetzungen enthaltend einen oder mehrere Polyasparaginsäureester der allgemeinen Formel (I)

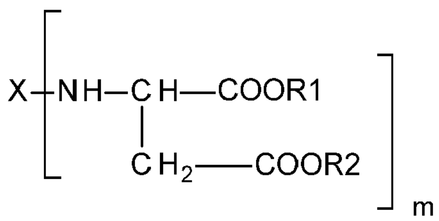

(I),

in welcher

| | |
|---|---|
| X | für einen m-wertigen, gegebenenfalls ein oder mehrere Heteroatome enthaltenden organischen Rest steht, wie er durch Entfernung der primären Aminogruppen aus einem entsprechenden, (cyclo)aliphatisch bzw. araliphatisch gebundene primäre Aminogruppen aufweisenden Polyamin des Molekulargewichtsbereichs 60 bis 6000 g/mol erhalten werden kann, und der weitere, gegenüber Isocyanatgruppen reaktive und/oder bei Temperaturen bis 100°C inerte funktionelle Gruppen enthalten kann, |
| R1 und R2 | für gleiche oder verschiedene organische Reste, mit je 1 bis 18 Kohlenstoffatomen stehen, |
| m | für eine ganze Zahl >1 steht, |

und
gegebenenfalls einen oder mehrere Polyasparaginsäureester mit primärer Aminogruppe der allgemeinen Formel (II)

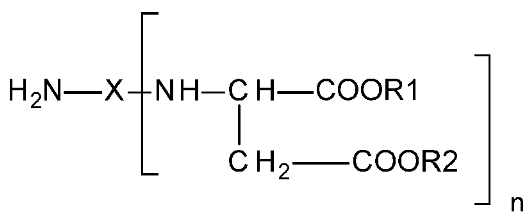

(II)

in welcher

| | |
|---|---|
| n | für m-1 steht, |
| X, Reste R1 und R2 | die oben genannten Bedeutungen haben, |

dadurch gekennzeichnet, dass in Komponente A Fumarsäuredialkylester in einer Menge von 0,01 bis 1,2 Gewichts-% (≥ 0,01 bis ≤ 1,2 Gewichts-%), bezogen auf das Gesamtgewicht der Komponente A, vorliegen.

Bevorzugt sind Polyasparaginsaureester-haltige Komponenten A Zusammensetzungen enthaltend einen oder mehrere Polyasparaginsäureester der allgemeinen Formeln (I) und gegebenenfalls (II) bei denen R1 und R2 für gleiche oder verschiedene Alkylreste mit je 1 bis 18 Kohlenstoffatomen, bevorzugt gleiche oder verschiedene Alkylreste mit je 1 bis 8 Kohlenstoffatomen und ganz besonders bevorzugt für jeweils Alkylreste wie Methyl-, Ethyl-, Propyl-, iso-Propyl-, Butyl- oder iso-Butyl-Reste stehen. Am meisten bevorzugt ist Ethyl.

Polyasparaginsaureester-haltige Komponenten A sind Zusammensetzungen enthaltend einen oder mehrere Polyasparaginsäureester der allgemeinen Formeln (I) und gegebenenfalls (II), bei denen X für organische Reste steht, die durch Entfernung der primären Aminogruppen aus einem entsprechenden, (cyclo)aliphatisch bzw. araliphatisch gebundene primäre Aminogruppen aufweisenden Polyamin erhalten werden, ausgewählt aus der folgenden Gruppe: alle bekannten Polyamine mit primären Aminogruppen, die der allgemeinen Formel (III) entsprechen. Beispielhaft seien die folgenden Verbindungen genannt: Ethylendiamin, 1,2-Diaminopropan, 1,4-Diaminobutan, 1,5-Diaminopentan, 2,5-Diamino-2,5-dimethylhexan, 1,5-Diamino-2-methylpentan (Dytek®A, Fa Invista), 1,6-Diaminohexan, 2,2,4- und/oder 2,4,4-Trimethyl-1,6-diaminohexan, 1,11-Diaminoundecan, 1,12-Diaminododecan oder Triaminononan, Etheramine, wie z.B. 4,9-dioxadodecane-1,12-diamine, 4,7,10-trioxatridecane-1,13-diamine, oder höhermolekulare Polyetherpolyamine mit aliphatisch gebundenen, primären Aminogruppen, wie sie beispielsweise unter der Bezeichnung Jeffamin® von der Firma Huntsman vertrieben werden. Ebenfalls einsetzbar sind aliphatische polyzyklische Polyamine, wie Tricyclodecanbismethylamin (TCD-Diamin) oder Bis(aminomethyl)norbornane, amino-funktionelle Siloxane, z.B. Diaminopropylsiloxan G10 DAS (Fa. Momentive), Fettalkyl-basierte Amine, wie z.B. Fentamine der Fa. Solvay, Dimerfettsäurediamine wie z.B Priamine der Fa. Croda.

Bevorzugt sind Polyasparaginsaureester-haltige Komponenten A Zusammensetzungen enthaltend einen oder mehrere Polyasparaginsäureester der allgemeinen Formeln (I) und gegebenenfalls (II) bei denen X für organische Reste steht, die durch Entfernung der primären Aminogruppen aus einem der Polyamine der allgemeinen Formel (III) erhalten wird, worin m = 2 bedeutet und X für einen cyclischen Kohlenwasserstoffrest mit mindestens einem cyclischen Kohlenstoffring steht. Beispiele für besonders bevorzugt einsetzbare Diamine sind 1-Amino-3,3,5-trimethyl-5-aminomethylcyclohexan (IPDA), 2,4- und/oder 2,6-Hexahydrotoluylendiamin (H6-TDA), Isopropyl-2,4-diaminocyclohexan, und/oder Isopropyl-2,6-diaminocyclohexan, 1,3-Bis-(aminomethyl)-cyclohexan, 2,4'-, und/oder 4,4'-Diamino-dicyclohexylmethan, 3,3'-Dimethyl-4,4'-diamino-dicyclohexylmethan (Laromin® C 260, Fa. BASF AG), die isomere, eine Methylgruppe als Kernsubstituenten aufweisende Diaminodicyclohexylmethane (=C-Monomethyl-diaminodicyclohexylmethane), 3(4)-Aminomethyl-1-methylcyclohexylamin (AMCA) sowie araliphatische Diamine, wie z.B. 1,3-Bis-(aminomethyl)-benzol oder m-Xylylendiamin.

Ebenfalls bevorzugt sind Polyasparaginsaureester-haltige Komponenten A Zusammensetzungen enthaltend einen oder mehrere Polyasparaginsäureester der allgemeinen Formeln (I) und gegebenenfalls (II) bei denen X für organische Reste steht, die durch Entfernung der primären Aminogruppen aus einem der Polyamine der allgemeinen Formel (III) erhalten wird, ausgewählt aus der Gruppe: Polyetherpolyamine mit aliphatisch gebundenen primären Aminogruppen, 1,2 Diaminopropan, 1,4-Diaminobutan, 1,6-Diaminohexan, 1,5-Diamino-2-methylpentan, 2,5 Diamino-2,5-dimethylhexan, 2,2,4- und/oder 2,4,4-Trimethyl-1,6-diaminohexan, 1,11-Diaminounodecan, 1,12-Diaminododecan, 1-Amino-3,3,5-trimehtyl-5-aminomethylcyclohexan, 2,4- und/oder 2,6-Hexahydrotoluylendiamin, 1,5-Diaminopentan, 2,4'- und/oder 4,4'-Diamino-dicyclohexylmethan oder 3,3'-Dimethyl-4,4'-diamino-dicyclohexylmethan. Besonders bevorzugt sind 3,3'-Dimethyl-4,4'-diamino-dicyclohexylmethan, 1,5-Diaminopentan, 2,4'- und/oder 4,4'-Diaminodicyclohexylmethan, 1,5-Diamino-2-methylpentan und ganz besonders bevorzugt ist die Verwendung von 2,4'- und/oder 4,4'-Diaminodicyclohexylmethan.

Besonders bevorzugt sind Polyasparaginsaureester-haltige Komponenten A Zusammensetzungen enthaltend einen oder mehrere Polyasparaginsäureester der allgemeinen Formeln (I) und gegebenenfalls (II), bei denen X für organische Reste steht, die durch Entfernung der primären Aminogruppen aus einem der Polyamine der allgemeinen Formel (III) erhalten wird, ausgewählt aus der Gruppe: Polyetherpolyamine mit aliphatisch gebundenen primären Aminogruppen, 1,2 Diaminopropan, 1,4-Diaminobutan, 1,5-Diaminopentan, 1,6-Diaminohexan, 1,5-Diamino-2-methylpentan, 2,5 Diamino-2,5-dimethylhexan, 2,2,4- und/oder 2,4,4-Trimethyl-1,6-diaminohexan, 1,11-Diaminounodecan, 1,12-Diaminododecan, 1-Amino-3,3,5-trimehtyl-5-aminomethylcyclohexan, 2,4- und/oder 2,6-Hexahydrotoluylendiamin, 2,4'- und/oder 4,4'-Diamino-dicyclohexylmethan oder 3,3'-Dimethyl-4,4'diamino-dicyclohexylmethan.

Ganz besonders bevorzugt sind Polyasparaginsaureester-haltige Komponenten A Zusammensetzungen enthaltend einen oder mehrere Polyasparaginsäureester der allgemeinen Formeln (I) und gegebenenfalls (II), bei denen X für organische Reste steht, die durch Entfernung der primären Aminogruppen aus einem der Polyamine der allgemeinen Formel (III) erhalten wird, ausgewählt aus der Gruppe: 3,3'-Dimethyl-4,4'diaminodicyclohexylmethan, 2,4'- und/oder 4,4'-Diaminodicyclohexylmethan, 1,5-Diamino-2-methylpentan.

Index m steht für eine ganze Zahl >1 und bevorzugt für 2.

Sofern die Polyasparaginsaureester-haltige Komponente A einen oder mehrere Polyasparaginsäureester der allgemeinen Formel (II) enthält, so ist dieser/ sind diese mit einem Anteil von > 0%, bevorzugt mindestens 0,1% (≥ 0,1%), besonders bevorzugt mindestens 1% (≥ 1%), ganz besonders bevorzugt mindestens 4% (≥ 4%), und bevorzugt von

maximal 20% (≤ 20%), besonders bevorzugt maximal 15% (≤ 15%) der GC Oberfläche (gemessen als Flächen-% im Gas Chromatogram) enthalten, wobei die Summe der GC Oberflächen der Verbindungen der beiden allgemeinen Formeln (I) und (II) 100% beträgt. Die angegebenen Ober- und Untergrenzen sind beliebig kombinierbar. Es gelten alle möglichen Kombinationen als offenbart.

Bevorzugt sind Polyasparaginsaureester-haltige Komponenten A Zusammensetzungen enthaltend einen oder mehrere Polyasparaginsäureester der allgemeinen Formeln (I) und gegebenenfalls Formel (II), mit einem Anteil von 0,01 bis 1,2 Gew.-% (≥ 0,01 bis ≤ 1,2 Gew.-%), bevorzugt 0,01 bis 1 Gew.-% (≥ 0,01 bis ≤ 1 Gew.-%), besonders bevorzugt 0,01 bis 0,1 Gew.-% (≥ 0,01 bis ≤ 0,1 Gew.-%), bezogen auf das Gesamtgewicht der Komponente A, an Fumarsäuredialkylestern. Besonders bevorzugt sind Polyasparaginsäureester-haltige Komponenten A Zusammensetzungen enthaltend einen oder mehrere Polyasparaginsäureester der allgemeinen Formel (I),
in welcher

| | |
|---|---|
| X | für einen m-wertigen, gegebenenfalls ein oder mehrere Heteroatome enthaltenden organischen Rest steht, wie er durch Entfernung von primären Aminogruppen aus Polyetherpolyaminen mit aliphatisch gebundenen primären Aminogruppen, 1,2 Diaminopropan, 1,4-Diaminobutan, 1,5-Diaminopentan, 1,6-Diaminohexan, 1,5-Diamino-2-methylpentan, 2,5 Diamino-2,5-dimethylhexan, 2,2,4- und/oder 2,4,4-Trimethyl-1,6-diaminohexan, 1,11-Diaminounodecan, 1,12-Diaminododecan, 1-Amino-3,3,5-trimethyl-5-aminomethylcyclohexan, 2,4- und/oder 2,6-Hexahydrotoluylendiamin, 2,4'- und/oder 4,4'-Diaminodicyclohexylmethan oder 3,3'-Dimethyl-4,4'diamino-dicyclohexylmethan erhalten wird, |
| R1 und R2 | für gleiche oder verschiedene Alkylreste mit je 1 bis 8 Kohlenstoffatomen stehen, |
| m | für eine ganze Zahl > 1 steht, |

und
einen oder mehrere Polyasparaginsäureester mit primärer Aminogruppe der allgemeinen Formel (II),
in welcher

| | |
|---|---|
| n | für m-1 steht, |
| X, Reste R1 und R2 | die oben genannten Bedeutungen haben, |

dadurch gekennzeichnet, dass der Anteil der Verbindungen der allgemeinen Formel (II) > 0%, bevorzugt mindestens 0,1% (≥ 0,1%), besonders bevorzugt mindestens 1% (≥ 1%), ganz besonders bevorzugt mindestens 4% (≥ 4%) der GC Oberfläche (gemessen als Flächen-% im Gas Chromatogram) entspricht, wobei die Summe der GC Oberflächen der Verbindungen der beiden allgemeinen Formeln (I) und (II) 100% beträgt, und in Komponente A Fumarsäuredialkylester in einer Menge von 0,01 bis 1,2 Gew.-% (≥ 0,01 bis ≤ 1,2 Gew.-%), bezogen auf das Gesamtgewicht der Komponente A, vorliegen.

Eine alternative besonders bevorzugte Ausführungsform entspricht der zuvor beschriebenen, wobei jedoch keine Polyasparaginsäureester mit primärer Aminogruppe der allgemeinen Formel (II) in der Polyasparaginsaureester-haltigen Komponenten A enthalten ist.

Ganz besonders bevorzugt sind Polyasparaginsaureester-haltige Komponenten A Zusammensetzungen enthaltend einen oder mehrere Polyasparaginsäureester der allgemeinen Formel (I)
in welcher

| | |
|---|---|
| X | für einen m-wertigen organischen Rest steht, wie er durch Entfernung von primären Aminogruppen aus 3,3'-Dimethyl-4,4'diaminodicyclohexylmethan, 2,4'- und/oder 4,4'-Diaminodicyclohexylmethan, 1,5-Diamino-2-methylpentan erhalten werden kann, |
| R1 und R2 | für gleiche oder verschiedene Alkylreste ausgewählt aus der Gruppe Methyl-, Ethyl-, Propyl-, iso-Propyl-, Butyl- oder iso-butyl-Reste stehen, |
| m | für 2 steht, |

und
einen oder mehrere Polyasparaginsäureester mit primärer Aminogruppe der allgemeinen Formel (II),
in welcher

| | |
|---|---|
| n | für m-1 steht, |
| X, Reste R1 und R2 | die oben genannten Bedeutungen haben, |

dadurch gekennzeichnet, dass der Anteil der Verbindungen der allgemeinen Formel (II) > 0%, bevorzugt mindestens 0,1% (≥ 0,1%), besonders bevorzugt mindestens 1% (≥ 1%), ganz besonders bevorzugt mindestens 4% (≥ 4%) der GC

Oberfläche (gemessen als Flächen-% im Gas Chromatogram) entspricht, wobei die Summe der GC Oberflächen der Verbindungen der beiden allgemeinen Formeln (I) und (II) 100% beträgt und in Komponente A Fumarsäuredialkylester in einer Menge von 0,01 bis 1 Gew.-% (≥ 0,01 bis ≤ 1 Gew.-%), bezogen auf das Gesamtgewicht der Komponente A, vorliegen.

Eine alternative ganz besonders bevorzugte Ausführungsform entspricht der zuvor beschriebenen, wobei jedoch keine Polyasparaginsäureester mit primärer Aminogruppe der allgemeinen Formel (II) in der Polyasparaginsaureester-haltigen Komponenten A enthalten ist.

Am meisten bevorzugt sind Polyasparaginsaureester-haltige Komponenten A Zusammensetzungen enthaltend einen oder mehrere Polyasparaginsäureester der allgemeinen Formel (I),
in welcher

X für einen m-wertigen organischen Rest steht, wie er durch Entfernung von primären Aminogruppen aus 3,3'-Dimethyl-4,4'diaminodicyclohexylmethan, 2,4'- und/oder 4,4'-Diaminodicyclohexylmethan erhalten werden kann,
R1 und R2 für Ethyl-Reste stehen,
m für 2 steht,

und
einen oder mehrere Polyasparaginsäureester mit primärer Aminogruppe der allgemeinen Formel (II),
in welcher

n für m-1 steht,
X, Reste R1 und R2 die oben genannten Bedeutungen haben,

dadurch gekennzeichnet, dass der Anteil der Verbindungen der allgemeinen Formel (II) > 0%, bevorzugt mindestens 0,1% (≥ 0,1%), besonders bevorzugt mindestens 1% (≥ 1%), ganz besonders bevorzugt mindestens 4% (≥ 4%) der GC Oberfläche (gemessen als Flächen-% im Gas Chromatogram) entspricht, wobei die Summe der GC Oberflächen der Verbindungenen der beiden allgemeinen Formel (I) und (II) 100% beträgt und in Komponente A Fumarsäuredialkylester in einer Menge von 0,01 bis 0,1 Gew.-% (≥ 0,01 bis ≤ 0,1 Gew.-%), bezogen auf das Gesamtgewicht der Komponente A, vorliegen.

Eine alternative am meisten bevorzugte Ausführungsform entspricht der zuvor beschriebenen, wobei jedoch keine Polyasparaginsäureester mit primärer Aminogruppe der allgemeinen Formel (II) in der Polyasparaginsaureester-haltigen Komponenten A enthalten ist.

Bevorzugt sind Polyasparaginsaureester-haltige Komponenten A Zusammensetzungen enthaltend einen oder mehrere Polyasparaginsäureester der allgemeinen Formel (I) und gegebenenfalls Formel(II), die eine Platin-Cobalt-Farbzahl ≤ 100, besonders bevorzugt ≤ 50 aufweisen. Die Messung der Platin-Cobalt-Farbzahl erfolgt gemäß DIN EN ISO 6271:2016-05.

Polyasparaginsaureester-haltige Komponenten A, enthaltend einen oder mehrere Polyasparaginsäureester der allgemeinen Formel (I) und Formel (II), lassen sich durch das folgende Verfahren herstellen:

Umsetzung von Polyaminen der allgemeinen Formel (III),

$$X\left[NH_2\right]_m \qquad \text{(III)},$$

wobei X
für einen m-wertigen, gegebenenfalls ein oder mehrere Heteroatome enthaltenden organischen Rest steht, wie er durch Entfernung der primären Aminogruppen aus einem (cyclo)aliphatisch bzw. araliphatisch gebundene primäre Aminogruppen aufweisenden Polyamin des Molekulargewichtsbereichs 60 bis 6000 g/mol erhalten werden kann, und der weitere, gegenüber Isocyanatgruppen reaktive und/oder bei Temperaturen bis 100°C inerte funktionelle Gruppen enthalten kann,
m für eine ganze Zahl > 1, bevorzugt für 2 steht,

mit Verbindungen der allgemeinen Formel (IV)

R1OOC-CH=CH-COOR2 (IV),

wobei R1 und R2
für gleiche oder verschiedene organische Reste, vorzugsweise für gleiche oder verschiedene Alkylreste mit je 1 bis 18 Kohlenstoffatomen, besonders bevorzugt für gleiche oder verschiedene Alkylreste mit je 1 bis 8 Kohlenstoffatomen, ganz besonders bevorzugt für jeweils Alkylreste wie Methyl-, Ethyl-, Propyl-, iso-Propyl-, Butyl- oder iso-Butyl-Reste und am meisten bevorzugt für Ethyl stehen,

und einer destillativen Entfernung des nicht umgesetzten Anteils an der Verbindung der allgemeinen Formel (IV).

Vorzugsweise erfolgt das oben beschriebene Verfahren zur Herstellung der Polyasparaginsaureester-haltigen Komponenten A, enthaltend einen oder mehrere Polyasparaginsäureester der allgemeinen Formel (I) und Formel (II), in zwei Schritten. Im ersten Schritt werden die Verbindungen der allgemeinen Formel (III) und (IV) bei Temperaturen zwischen 0°C und 100°C, vorzugsweise 20° bis 80°C und besonders bevorzugt 20° bis 60°C, in einem Verhältnis der Äquivalente der primären Aminogruppen der Verbindungen der allgemeinen Formel (III) zu den C=C-Doppelbindungsäquivalenten der Verbindungen der allgemeinen Formel (IV) von 1:1.2 bis 1.2:1, vorzugsweise jedoch 1:1.05 bis 1.05:1 bis zu einem Restgehalt an Verbindungen der allgemeinen Formel (IV) von 2 bis 15 Gew.-Prozent, bevorzugt von 3 bis 10 Gew.-Prozent umgesetzt.

Im zweiten Schritt wird der nicht umgesetzte Anteil an der Verbindungen der allgemeinen Formel (IV) destillativ entfernt.

Polyasparaginsaureester-haltige Komponenten A, die nur Polyasparaginsäureester der allgemeinen Formel (I) enthalten, nicht jedoch der Formel (II), lassen sich durch analog herstellen, wobei jedoch mit einem Überschuss an Verbindungen der allgemeinen Formel IV gearbeitet wird, d.h. in einem Verhältnis der Äquivalente der primären Aminogruppen der Verbindungen der allgemeinen Formel (III) zu den C=C-Doppelbindungsäquivalenten der Verbindungen der allgemeinen Formel (IV) von 1:10, bevorzugt 1:5, besonders bevorzugt 1:2.

Geeignete Bedingungen während der Destillation sind ein Druckbereich zwischen 0.01 und 2 mbar und eine Temperatur des Sumpfablaufs beim Austritt aus der Destillationsapparatur ≤ 170°C und ≥ der Temperatur liegt, die sich aus der folgenden Formel (V) ergibt:

$$T(\text{Sumpfablauf}) = 27 \text{ x } \ln(p) + 150 \quad (V)$$

wobei T(Sumpfablauf) für die Temperatur des Sumpfablaufs in °C und
p für den Druck in der Destillationsapparatur in mbar stehen.

Durch Einhalten dieses Druckbereichs wird gewährleistet, dass einerseits moderate Temperaturen im Sumpfablauf ausreichen, um die Fumarsäuredialkylester im gewünschten Umfang abzureichern, andererseits das Verfahren im technischen Maßstab anwendbar bleibt. Bei geringerem Druck wird die Gasdichte zu gering und die erforderlichen Apparate deshalb so groß, dass das Verfahren aus wirtschaftlicher Sicht nachteilig wird.

Bevorzugt ist die Temperatur des Sumpfablaufs ≤ 170°C, dabei jedoch mindestens 20 K oberhalb der Temperatur, die sich aus der Formel (V) ergibt, besonders bevorzugt liegt sie zwischen 20 K und 40 K oberhalb der Temperatur, die sich aus der Formel (V) ergibt jedoch nicht oberhalb von 170°C.

Verbindungen der allgemeinen Formel (III), die in dem oben beschriebenen Verfahren Anwendung finden sind alle bekannten Polyamine mit primären Aminogruppen, die der allgemeinen Formel (III) entsprechen. Beispielhaft seien die folgenden Verbindungen genannt: Ethylendiamin, 1,2-Diaminopropan, 1,4-Diaminobutan, 1,5-Diaminopentan, 2,5-Diamino-2,5-dimethylhexan, 1,5-Diamino-2-methylpentan (Dytek®A, Fa Invista), 1,6-Diaminohexan, 2,2,4- und/oder 2,4,4-Trimethyl-1,6-diaminohexan, 1,11-Diaminoundecan,1,12-Diaminododecan oder Triaminononan, Etheramine, wie z.B. 4,9-dioxadodecane-1,12-diamine, 4,7,10-trioxatridecane-1,13-diamine, oder höhermolekulare Polyetherpolyamine mit aliphatisch gebundenen, primären Aminogruppen, wie sie beispielsweise unter der Bezeichnung Jeffamin® von der Firma Huntsman vertrieben werden. Ebenfalls einsetzbar sind aliphatische polyzyklische Polyamine, wie Tricyclodecanbismethylamin (TCD-Diamin) oder Bis(aminomethyl)norbornane, amino-funktionelle Siloxane, z.B. Diaminopropylsiloxan G10 DAS (Fa. Momentive), Fettalkyl-basierte Amine, wie z.B. Fentamine der Fa. Solvay, Dimerfettsäurediamine wie z.B Priamine der Fa. Croda.

Bevorzugt werden im oben beschriebenen Verfahren Polyamine der allgemeinen Formel (III) eingesetzt worin m = 2 bedeutet und X für einen cyclischen Kohlenwasserstoffrest mit mindestens einem cyclischen Kohlenstoffring steht. Beispiele für besonders bevorzugt einsetzbare Diamine sind 1-Amino-3,3,5-trimethyl-5-aminomethylcyclohexan (IPDA), 2,4- und/oder 2,6-Hexahydrotoluylendiamin (H6-TDA), Isopropyl-2,4-diaminocyclohexan, und/oder Isopropyl-2,6-diaminocyclohexan, 1,3-Bis-(aminomethyl)-cyclohexan, 2,4'- und/oder 4,4'-Diaminodicyclohexylmethan, 3,3'-Dimethyl-4,4'-diamino-dicyclohexylmethan (Laromin® C 260, Fa. BASF AG), die isomere, eine Methylgruppe als Kernsubstituenten aufweisende Diaminodicyclohexylmethane (=C-Monomethyl-diaminodicyclohexylmethane), 3(4)-Aminomethyl-1-methylcyclohexylamin (AMCA) sowie araliphatische Diamine, wie z.B. 1,3-Bis-(aminomethyl)-benzol oder m-Xylylendiamin.

Ebenfalls bevorzugt werden im erfindungsgemäßen Verfahren Polyamine der allgemeinen Formel (III) eingesetzt, ausgewählt aus der Gruppe: Polyetherpolyamine mit aliphatisch gebundenen primären Aminogruppen, 1,2 Diaminopropan, 1,4-Diaminobutan, 1,5-Diaminopentan, 1,6-Diaminohexan, 1,5-Diamino-2-methylpentan, 2,5 Diamino-2,5-dimethylhexan, 2,2,4- und/oder 2,4,4-Trimethyl-1,6-diaminohexan, 1,11-Diaminounodecan, 1,12-Diaminododecan, 1-Amino-3,3,5-trimehtyl-5-aminomethylcyclohexan, 2,4- und/oder 2,6-Hexahydrotoluylendiamin, 2,4'- und/oder 4,4'-Diamino-dicyclohexylmethan oder 3,3'-Dimethyl-4,4'-diamino-dicyclohexylmethan. Besonders bevorzugt sind 3,3'-Dimethyl-4,4'-diamino-dicyclohexylmethan, 2,4'- und/oder 4,4'-Diaminodicyclohexylmethan, 1,5-Diamino-2-methylpentan und ganz besonders bevorzugt ist die Verwendung von 2,4- und/oder 4,4'-Diaminodicyclohexylmethan.

Besonders bevorzugt werden im erfindungsgemäßen Verfahren Polyamine der allgemeinen Formel (III) eingesetzt, ausgewählt aus der Gruppe: Polyetherpolyamine mit aliphatisch gebundenen primären Aminogruppen, 1,2 Diaminopropan, 1,4-Diaminobutan, 1,5-Diaminopentan, 1,6-Diaminohexan, 1,5-Diamino-2-methylpentan, 2,5 Diamino-2,5-dimethylhexan, 2,2,4- und/oder 2,4,4-Trimethyl-1,6-diaminohexan, 1,11-Diaminounodecan, 1,12-Diaminododecan, 1-Amino-3,3,5-trimehtyl-5-aminomethylcyclohexan, 2,4- und/oder 2,6-Hexahydrotoluylendiamin, 2,4'- und/oder 4,4'-Diamino-dicyclohexylmethan oder 3,3'-Dimethyl-4,4'diamino-dicyclohexylmethan. Ganz besonders bevorzugt werden im erfindungsgemäßen Verfahren Polyamine der allgemeinen Formel (III) eingesetzt, ausgewählt aus der Gruppe 3,3'-Dimethyl-4,4'diaminodicyclohexylmethan, 2,4'- und/oder 4,4'-Diaminodicyclohexylmethan, 1,5-Diamino-2-methylpentan.

Bevorzugte Verbindungen der allgemeinen Formel (IV), die in dem oben beschriebenen Verfahren Anwendung finden sind Malein- oder Fumarsäureester der allgemeinen Formel (IV), worin R1 und R2 für gleiche oder verschiedene organische Reste mit je 1 bis 18 Kohlenstoffatomen stehen. Bevorzugt stehen R1 und R2 unabhängig voneinander für lineare oder verzweigte Alkylreste mit 1 bis 8 Kohlenstoffatomen, besonders bevorzugt für jeweils Alkylreste wie Methyl-, Ethyl-, Propyl-, iso-Propyl-, Butyl- oder iso-Butyl-Reste und ganz besonders bevorzugt für Ethyl.

Beispielhaft für Verbindungen der allgemeinen Formel (IV) seien die folgenden Verbindungen genannt: Maleinsäuredimethylester, -diethylester, -di-n oder -iso-propylester, -di-n-butylester, -di-2-ethyl-hexylester oder die entsprechenden Fumarsäureester. Ganz besonders bevorzugt ist Maleinsäurediethylester.

Die erfindungsgemäßen zweikomponentigen Beschichtungszusammensetzungen enthalten mindestens eine Polyisocyanatkomponente B.

Geeignete Polyisocyanatkomponenten B sind organische Polyisocyanate mit einer mittleren NCO-Funktionalität von mindestens 2 und einem Molekulargewicht von mindestens 140 g/mol. Gut geeignet sind vor allem unmodifizierte organische Polyisocyanate des Molekulargewichtsbereichs 140 bis 300 g/mol, Lackpolyisocyanate eines Molekulargewichts im Bereich von 300 bis 1000 g/mol, sowie Urethan-, Harnstoff- und / oder Allophanatgruppen- aufweisende NCO-Prepolymere eines über 400 g/mol liegenden Molekulargewichtes oder deren Gemische.

Unter dem Begriff "Lackpolyisocyanate" sind im Sinne der Erfindung Verbindungen oder Gemische von Verbindungen zu verstehen, die durch an sich bekannte Oligomerisierungsreaktion von einfachen Polyisocyanaten erhalten werden können. Geeignete Oligomerisierungsreaktionen sind z.B. die Carbodiimidisierung, Dimerisierung, Trimerisisierung, Biuretisierung, Harnstoffbildung, Urethanisierung, Allophanatisierung und/oder Cyclisierung unter Ausbildung von Oxadiazinstrukturen. Bei Oligomerisierung können mehrere der genannten Reaktionen gleichzeitig oder nacheinander ablaufen.

Bevorzugt handelt es sich bei den "Lackpolyisocyanaten" um Biuretpolyisocyanate, Isocyanuratgrupen-aufweisende Polyisocyanate, Isocyanurat- und Uretdiongruppen-aufweisende Polyisocyanatgemische, Urethan- und/oder Allophanatgruppen-aufweisende Polyisocyanate oder um Isocyanurat- und Allophanatgruppen-aufweisende Polyisocyanatgemische auf Basis einfacher organischer Polyisocyanate.

Ebenfalls geeignet als Polyisocyanatkomponente B sind die an sich bekannten Isocyanatgruppen aufweisenden Prepolymere auf Basis einfacher organischer Polyisocyanate und/oder auf Basis von Lackpolyisocyanaten einerseits und organischen Polyhydroxyverbindungen eines über 300 g/mol liegenden Molekulargewichts andererseits. Während es sich bei den Urethangruppen-aufweisenden Lackpolyisocyanaten um Derivate von niedermolekularen Polyolen des Molekulargewichtsbereichs von 62 bis 300 g/mol handelt, geeignete Polyole sind beispielsweise Ethylenglykol, Propylenglykol, Trimethylolpropan, Glycerin oder Gemische dieser Alkohole, werden zur Herstellung der Isocyanatgruppen aufweisenden Prepolymeren Polyhydroxyverbindungen eines über 300 g/mol, bevorzugt über 400 g/mol, besonders bevorzugt eines zwischen 400 und 8000 g/mol liegenden Molekulargewichts eingesetzt. Derartige Polyhydroxylverbindungen sind insbesondere solche, die pro Molekül 2 bis 6, bevorzugt 2 bis 3 Hydroxylgruppen aufweisen und aus der Gruppe, bestehend aus Ether-, Ester-, Thioether-, Carbonat- und Polyacrylatpoloyolen und Gemischen aus derartigen Polyolen ausgewählt sind.

Bei der Herstellung der Isocyanatgruppen aufweisenden Prepolymeren können die genannten höhermolekularen Polyole auch in Abmischungen mit den genannten niedermolekularen Polyolen zur Anwendung gelangen, so dass

unmittelbar Gemische aus niedermolekularen, Urethangruppen aufweisenden Lackpolyisocyanaten und höhermolekularen NCO-Prepolymeren resultieren, die ebenfalls als erfindungsgemäße Polyisocyanatkomponente b) geeignet sind.

Zur Herstellung der Isocyanatgruppen aufweisenden Prepolymeren oder deren Gemischen mit den Lackpolyisocyanaten werden einfache organische Polyisocyanate der nachstehend beispielhaft genannten Art oder Lackpolyisocynate mit den höhermolekularen Hydroxylverbindungen oder deren Gemischen mit niedermolekularen Polyhydroxylverbindungen der beispielhaft genannten Art unter Einhaltung eines NCO/OH Aquivalentverhaltnisses von 1.1:1 bis 40:1, bevorzugt 2:1 bis 25:1 unter Urethan und / oder Allophanatbildung umgesetzt. Gegebenenfalls kann bei Verwendung eines Überschusses an destillierbarem einfachem organischem Polyisocyanat dieser im Anschluss an die Umsetzung destillativ entfernt werden, so dass monomerenfreie Isocyanatgruppen aufweisende NCO-Prepolymere vorliegen, die ebenfalls als Polyisocyanatkomponente b) eingesetzt werden können.

Beispiele für geeignete einfache organische Polyisocyanate sind 1,4-Diisocyanatobutan, 1,5-Diisocyanatopentan, 1,6-Diisocyanatohexan (HDI), 1,5-Diisocyanato-2,2-dimethylpentan, 2,2,4-bzw. 2,4,4-Trimethyl-1,6-diisocyanatohexan, Tetramethylxylylendiisocyanat (TMXDI) 1-Isocyanato-3,3,5-trimethyl-5-isocyanatomethylcyclohexan (Isophorondiisocyanat, IPDI), 1-Isocyanato-1-methyl-4-(3)-isocyanatomethylcyclohexan, Dicyclohexylmethan-2,4'-und/oder 4,4'-diisocyanat, 1,10-Diisocyanatodecan, 1,12-Diisocyanatododecan, Cyclohexan-1,3- und -1,4-diisocyanat, Xylylendiisocyanat-Isomere, Triisocyanatononan (TIN), Naphthylen-1,5-diisocyanat, 2,4-Diisocyanatoluol oder dessen Gemische mit 2,6-Diisocyanatotoluol mit bevorzugt, bezogen auf Gemische, bis zu 35 Gew.-% 2,6-Diisocyanatotoluol, 2,2'-, 2,4'-, 4,4'-, Diisocyanatodiphenylmethan oder technische Polyisocyanatgemische der Diphenylmethanreihe, oder beliebige Gemische der genannten Polyisocyanate.

Bevorzugt kommen dabei aliphatische, cycloaliphatische oder araliphatische Polyisocyanate, ausgewählt aus der Gruppe 1,4-Diisocyanatobutan, 1,5-Diisocyanatopentan, 1,6-Diisocyanatohexan (HDI), 1,5-Diisocyanato-2,2-dimethylpentan, 2,2,4- bzw. 2,4,4-Trimethyl-1,6-diisocyanatohexan, Tetramethylxylylendiisocyanat (TMXDI) 1-Isocyanato-3,3,5-trimethyl-5-isocyanatomethylcyclohexan (Isophorondiisocyanat, IPDI), 1-Isocyanato-1-methyl-4-(3)-isocyanatomethylcyclohexan, Dicyclohexylmethan-2,4'-und/oder 4,4'-diisocyanat, 1,10-Diisocyanatodecan, 1,12-Diisocyanatododecan, Cyclohexan-1,3- und -1,4-diisocyanat, Xylylendiisocyanat-Isomere, Triisocyanatononan (TIN), oder beliebige Gemische derartiger Polyisocyanate, zum Einsatz.

Prinzipiell ist natürlich auch der Einsatz von Mischungen verschiedener Polyisocyanatkomponenten der vorstehend genannten Art möglich.

Neben der Polyasparaginsaureester-haltigen Komponente A kann die erfindungsgemäße zweikomponentige Zusammensetzung weitere gegenüber Isocyanatgruppen reaktionsfähige Komponenten (Komponenten C) enthalten.

Dies können beispielsweise niedermolekulare Polyole des Molekulargewichtsbereichs von 62 bis 300 g/mol, beispielsweise Ethylenglykol, Propylenglykol, Trimethylolpropan, Glycerin oder Gemische dieser Alkohole, oder Polyhydroxyverbindungen eines über 300 g/mol, bevorzugt über 400 g/mol, besonders bevorzugt eines zwischen 400 und 8000 g/mol liegenden Molekulargewichts sein. Derartige Polyhydroxylverbindungen sind insbesondere solche, die pro Molekül 2 bis 6, bevorzugt 2 bis 3 Hydroxylgruppen aufweisen und aus der Gruppe, bestehend aus Ether-, Ester-, Thioether-, Carbonat- und Polyacrylatpoloyolen und Gemischen aus derartigen Polyolen ausgewählt sind.

Weiterhin enthält die erfindungsgemäße zweikomponentige Zusammensetzung mindestens ein anorganisches und/oder organisches Pigment (Komponente D1), wie beispielsweise Titandioxid, Zinkoxid, Eisenoxide, Chromoxide oder Russe.

Der Anteil an Pigmenten in der Zusammensetzung beträgt bevorzugt mindestens 3 Gew.-% ($\geq$ 3 Gew.-%), besonders bevorzugt 5 bis 40 Gew.-% ($\geq$ 5 bis $\leq$ 40 Gew.-%), ganz besonders bevorzugt 10 bis 35 Gew.-% ($\geq$ 5 bis $\leq$ 40 Gew.-%), bezogen auf das Gesamtgewicht der zweikomponentigen Zusammensetzung.

Eine ausführliche Übersicht über Pigmente für Beschichtungen gibt das "Lehrbuch der Lacke und Beschichtungen, Band II, Pigmente, Füllstoffe, Farbstoffe", H. Kittel, Verlag W.A. Colomb in der Heenemann GmbH, Berlin-Oberschwandorf, 1974, S. 17-265.

Darüberhinaus kann die erfindungsgemäße Zusammensetzung weitere, für die Beschichtungstechnologie mit Polyisocyanat-Polyadditionsverbindungen, insbesondere für Polyurethanverbindungen typische Hilfs- und Zusatzstoffe enthalten (Komponente D2):

Beispiele sind Katalysatoren/Aktivatoren wie zum Beispiel Titan-, Zirkonium-, Bismut-, Zinn- und/oder eisenhaltigen Katalysatoren, wie sie beispielsweise in WO 05058996 beschrieben sind. Möglich ist auch eine Zugabe von Aminen oder Amidinen. Der Anteil an Vernetzungskatalysator in der Zusammensetzung beträgt vorzugsweise 0,001 bis 5 Gew.-% ($\geq$ 0,001 bis $\leq$ 5 Gew.-%), bevorzugt 0,005 bis 2 Gew.-% ($\geq$ 0,005 bis $\leq$ 2 Gew.-%), besonders bevorzugt 0,01 bis 1 Gew.-% ($\geq$ 0,01 bis $\leq$ 1 Gew.-%), bezogen auf das Gesamtgewicht der zweikomponentigen Zusammensetzung.

Beispiele weiterer geeigneter Hilfs- und Zusatzstoffe D2 sind Lackadditive, wie Lichtschutzmittel wie UV-Absorber und sterisch gehinderte Amine (HALS), weiterhin Stabilisatoren, Entschäumungs-, Antikrater- und/oder Netzmittel, Verlaufsmittel, filmbildende Hilfsmittel, Reaktivverdünner, Biozide, Lösemittel oder Substanzen zur Rheologiesteuerung. Der Einsatz von Lichtschutzmitteln insbesondere von UV-Absorber wie beispielsweise substituierten Benztriazolen, S-Phenyltriazinen oder Oxalaniliden sowie sterisch gehinderten Aminen insbesondere mit 2,2,6,6-Tetramethyl-piperidyl-Strukturen - als HALS bezeichnet - ist beispielhaft beschrieben in A. Valet, Lichtschutzmittel für Lacke, Vincentz Verlag, Hannover, 1996.

Stabilisatoren wie beispielsweise Radikalfänger und andere Polymerisationsinhibitoren wie sterisch gehinderte Phenole stabilisieren Lackkomponenten während der Lagerung und sollen Verfärbungen während der Aushärtung verhindern. Netz- und Verlaufsmittel verbessern die Oberflächenbenetzung und/oder den Verlauf von Lacken. Beispiele sind Fluortenside, Silikontenside sowie spezielle Polyacrylate. Rheologiesteuernde Additive sind wichtig um die Eigenschaften des Zwei-Komponenten-Systems bei der Applikation und in der Verlaufsphase auf dem Substrat zu steuern und sind beispielsweise aus den Patentschriften WO 9422968, EP0276501, EP0249201 oder WO 9712945 bekannt. Weiterhin können Wasserfänger, wie z.B. Triethylorthoformiat, Toluolsulfoisocyanat, Monooxazolidine oder Molekularsiebe, und Hydrolyseschutzmittel, wie z.B. Carbodiimide, eingesetzt werden. Der Anteil an Lackadditiven in der Zusammensetzung beträgt vorzugsweise 0,5 bis 15 Gew.-% (≥ 0,5 bis ≤ 15 Gew.-%), bevorzugt 1 bis 10 Gew.-% (≥ 1 bis ≤ 10 Gew.-%), besonders bevorzugt 2 bis 7 Gew.-% (≥ 2 bis ≤ 7 Gew.-%), bezogen auf das Gesamtgewicht der zweikomponentigen Zusammensetzung. Eine ausführliche Übersicht über Lackadditive findet sich in dem "Lehrbuch der Lacke und Beschichtungen, Band III, Lösemittel, Weichmacher, Additive, Zwischenprodukte", H. Kittel, Verlag W.A. Colomb in der Heenemann GmbH, Berlin-Oberschwandorf, 1976, S. 237-398.

Weitere Hilfs- und Zusatzstoffe D2 sind Füllstoffe. Geeignete Füllstoffe sind beispielsweise Schwerspat, Kreide oder Talcum. Weiterhin können Füllstoffe mit Barriere-Wirkung eingesetzt werden, wie z.B. plättchenförmige Schichtsilikate oder Schichtaluminosilikate, Graphit, Aluminiumplättchen oder Barrierepigmente wie beispielsweise Eisenglimmer und Nanofüllstoffe wie z.B. Tone und Aluminiumsilikate. Wobei die Füllstoffe alleine oder in Kombination eingesetzt werden können. Der Anteil an Füllstoff in der Beschichtung beträgt vorzugsweise 1 bis 30 Gew.-% (≥ 1 bis ≤ 30 Gew.-%), bevorzugt 3 bis 20 Gew.-% (≥ 3 bis ≤ 20 Gew.-%), besonders bevorzugt 5 bis 15 Gew.-% (≥ 5 bis ≤ 15 Gew.-%), bezogen auf das Gesamtgewicht der zweikomponentigen Zusammensetzung. Eine ausführliche Übersicht über Füllstoffe für Beschichtungen gibt das "Lehrbuch der Lacke und Beschichtungen, Band II, Pigmente, Füllstoffe, Farbstoffe", H. Kittel, Verlag W.A. Colomb in der Heenemann GmbH, Berlin-Oberschwandorf, 1974, S. 17-265.

Ebenfalls als Hilfs- und Zusatzstoffe D2 gelten Lösungsmittel. Das Lösungsmittel kann ein organisches Lösungsmittel oder ein Gemisch organischer Lösungsmittel sein oder Wasser oder ein Gemisch aus organischen(m) Lösungsmittel(n) und Wasser. Geeignete Lösungsmittel sind in dem Fachmann bekannter Art und Weise abgestimmt auf die Zusammensetzung sowie das Applikationsverfahren einzusetzen. Lösemittel sollen die eingesetzten Komponenten lösen und deren Vermischung fördern sowie Unverträglichkeiten vermeiden. Weiterhin sollen sie während der Applikation und der Härtung die Beschichtung auf die ablaufende Vernetzungsreaktion abgestimmt verlassen, so dass eine lösemittelfreie Beschichtung mit möglichst guter Optik und ohne Fehlstellen wie Kocher oder Nadelstiche entsteht. Insbesondere kommen Lösemittel in Betracht, die in der Zwei Komponenten Technologie zur Anwendung kommen. Beispiele für organische Lösungsmittel sind Ketone wie Aceton, Methylethylketon oder Hexanon, Ester wie Ethylacetat, Butylacetat, Methoxyproylacetat, substituierte Glykole und andere Ether, Aromaten wie Xylol oder Solventnaphtha wie z.B. der Fa. Exxon-Chemie sowie Gemische der genannten Lösemittel. Liegt der NCO-reaktive Teil der Zusammensetzung als wässrige Dispersion vor, eignet sich auch Wasser als Löse- bzw. Verdünnungsmittel. Sofern vorhanden, beträgt der Anteil an Lösungsmittel in der Zusammensetzung vorzugsweise 0,5 bis 40 Gew.-% (≥ 0,5 bis ≤ 40 Gew.-%), bevorzugt 1 bis 30 Gew.-% (≥ 1 bis ≤ 30 Gew.-%), besonders bevorzugt 2 bis 25 Gew.-% (≥ 2 bis ≤ 25 Gew.-%), bezogen auf das Gesamtgewicht der der zweikomponentigen Zusammensetzung.

Vorzugsweise beträgt das Verhältnis der Polyisocyanatkomponente B zu der Polyasparaginsaureester-haltigen Komponente A in der Zusammensetzung bezogen auf die Stoffmengen der Polyisocyanatgruppen zu den NCO-reaktiven Gruppen von 0,5 zu 1,0 bis 3,0 zu 1,0. Besonders bevorzugt ist ein Verhältnis von 0,9 zu 1,0 bis 1,5 zu 1,0. Ganz besonders bevorzugt ist ein Verhältnis von 1,05 zu 1,0 bis 1,25 zu 1,0.

Die erfindungsgemäße zweikomponentige Zusammensetzung ist vorzugsweise keine aufschäumbare oder schaumbildende Zusammensetzung. Die Zusammensetzung ist vorzugsweise nicht radikalisch polymerisierbar, insbesondere nicht photo-polymerisierbar, d.h. die Zusammensetzung härtet nicht durch radikalische Prozesse aus, insbesondere nicht durch radikalische Polymerisationsprozesse die durch aktinische Strahlung initiiert werden.

Die Herstellung der erfindungsgemäßen zweikomponentigen Beschichtungszusammensetzung erfolgt nach in der Technologie der Lacke und Beschichtungen an sich bekannten Methoden.

Eine isocyanatreaktive (R)und eine isocyanathaltige Komponente (H) werden zunächst getrennt durch Vermischen der jeweiligen isocyanatreaktiven Komponenten A und C, bzw. durch Vermischen der jeweiligen Polyisocyanatkomponenten B hergestellt. Die Hilfs- und Zusatzstoffe D1 und D2 werden bevorzugt der isocyanatreaktiven Komponente R beigemischt. Ein Vermischen der so hergestellten Komponenten R und H erfolgt erst unmittelbar vor oder während der Applikation. Erfolgt das Vermischen vor der Applikation ist zu beachten, dass die Reaktion der Bestandteile nach dem Vermischen bereits startet. Je nach Auswahl der Komponenten und der Zusatzstoffe wird die Reaktion unterschiedlich schnell ablaufen. Die Verarbeitungszeit innerhalb derer die Zusammensetzung appliziert werden muss, auch als Topfzeit bezeichnet und definiert als die Zeit von der Vermischung der Komponenten bis zur Verdoppelung der Ausgangsviskosität und/oder der Auslaufzeit (bestimmt nach DIN EN ISO 2431:2012-03, jedoch unter Verwendung eines

DIN 4 Auslaufbechers), liegt dann je nach Auswahl der Komponenten im Bereich von 1 Minute bis zu 24 Stunden, meist im Bereich von 10 Minuten bis 8 Stunden. Die Bestimmung der Topfzeit erfolgt nach dem Fachmann bekannten Methoden.

In einer bevorzugten Ausführungsform werden die isocaynatreaktiven Komponenten gemischt, gegebenenfalls einhergehend mit oder gefolgt von einer Dispergierung, und dann angerieben. Letzteres kann z.B. unter Verwendung einer Perlmühle erfolgen. Der Anreibung kann ein Siebschritt folgen.

Die Erfindung betrifft auch ein Verfahren zum Beschichten eines Substrats, welches mindestens folgende Schritte umfasst:

i) Aufbringen der vorstehend beschriebenen zweikomponentigen Beschichtungszusammensetzung auf mindestens einen Teil eines zu beschichtenden Substratsund
ii) Härten der Beschichtungszusammensetzung aus Schritt i).

Weitere Gegenstände der vorliegenden Erfindung sind daher die Verwendung der erfindungsgemäßen zweikomponentigen Beschichtungszusammensetzungen zur Herstellung von Beschichtungen auf Substraten, das oben beschriebene Verfahren zum Beschichten eines Substrats, sowie die so erhältlichen beschichteten Substrate selbst.

Die Substrate können bereits mit einer oder mehreren Lackschichten ganz oder teilweise beschichtet sein. Diese Lackschichten können noch ungehärtet oder feucht, teilgehärtet oder vollständig gehärtet sein, vorzugsweise sind die weiteren Lackschichten auf dem Substrat teilgehärtet oder vollständig gehärtet. Beispiele für Lackschichten sind Grundierungen, Primer, Füller, Spachtel, Basislacke oder bereits vollständig lackierte Substrate, die nach einer eventuellen Vorbehandlung wie Anschleifen oder Plasmaaktivierung erneut überschichtet werden.

Die zweikomponentigen Beschichtungszusammensetzungen dienen insbesondere zur Herstellung von Beschichtungen für den Korrosionschutz, allgemeine Industrielackierung sowie zur Verwendung im Bereich ACE (Agriculture, Construction and Earth moving equipment). Dabei handelt es sich bei den Beschichtungen bevorzugt um Deckbeschichtungen.

Weitere, bevorzugte Gegenstände der vorliegenden Erfindung sind daher die Verwendung der vorstehend beschriebenen zweikomponentigen Beschichtungszusammensetzungen zur Herstellung von Deckbeschichtungen auf Substraten, das oben beschriebene Verfahren zum Beschichten von Substraten mit diesen Deckbeschichtungen, sowie die so erhältlichen beschichteten Substrate selbst.

Ein weiterer Gegenstand ist darüber hinaus die Verwendung der Deckbeschichtungen im Bereich des Korrosionschutzes, der allgemeinen Industrielackierung oder als ACE-Beschichtungen.

Die Beschichtungszusammensetzung kann durch herkömmliche Auftragungsverfahren aufgetragen werden. Beispiele für Auftragsverfahren sind Aufpinseln, Bürsten, Walzenauftrag, Rakeln, Tauchen und Sprühen, bevorzugt ist ein Sprühauftrag. An das Aufbringen schließt sich, nach einer optionalen Ablüftzeit, die Aushärtung bzw. die Trocknung der erfindungsgemäßen Zusammensetzung auf dem Substrat bzw. Objekt an. Diese erfolgt nach den in der Beschichtungstechnologie üblichen Methoden entweder unter Umgebungsbedingungen bezüglich Temperatur und Luftfeuchte oder unter forcierten Bedingungen beispielsweise durch Temperaturerhöhung in Öfen, Einsatz von Strahlung wie beispielsweise Infrarot- oder Nahinfrarot- oder Mikrowellenstrahlung, sowie Einsatz von entfeuchteter und/oder erwärmter Luft oder anderen Gasen. Bevorzugt ist dabei, auf den Einsatz von Geräten zur forcierten Aushärtung zu verzichten. Die aufgetragene Beschichtungszusammensetzung wird zum Beispiel bei Temperaturen von -20 bis 100°C, vorzugsweise von -10 bis 80°C, bevorzugter von 0 bis 60°C und am meisten bevorzugt von 10 bis 40°C ausgehärtet. Auch wenn nicht bevorzugt, geringere Härtungstemperaturen können ebenfalls verwendet werden, werden jedoch zu längeren Härtungszeiten führen.

Es ist ebenfalls möglich, auch wenn nicht bevorzugt, die Zusammensetzung bei höheren Temperaturen, beispielsweise 80 bis 160°C oder höher, auszuhärten.

Nach dem Aushärten der ersten Beschichtung kann eine weitere Beschichtung aufgebracht und ebenfalls ausgehärtet werden.

Ein weiterer Gegenstand der Erfindung ist die Verwendung der der zweikomponentigen Beschichtungszusammensetzungen zur Herstellung von Glanz-stabilen Beschichtungen.

## Experimenteller Teil

### Rohstoffe und Substrate:

PACM 20: ein Gemisch aus 2,4 und 4,4'-Diaminodicyclohexylmethan, Hersteller Fa. Evonik
Desmodur N 3600: ein niedrigviskoses HDI-Trimerisat mit ca. 23% NCO und ≤ 0,25% freies HDI, Hersteller Fa. Covestro
Desmodur XP 2489: ein aliphatisches Polyisocyanat auf Basis von HDI und Isophorondiisocyanat Trimerisat mit ca. 21 % NCO, Hersteller Fa. Covestro
UOP L-Pulver: Molekularsieb, Honeywell UOP, USA

Byk A 530: Entschäumer, Byk-Chemie GmbH, Deutschland
Disperbyk 163: Dispersionsmittel, Byk-Chemie GmbH, Deutschland
Titandioxid R-KB-4: Pigment, verschiedene Lieferanten
Chromoxid Grün GN: Pigment, verschiedene Lieferanten
Eisenoxid Gelb 415: Pigment, verschiedene Lieferanten
Heucophos® ZPA: Korrosionsschutzpigment, Heubach GmbH, Deutschland
Schwerspat EWO: Baryt Füllstoff, Sachtleben, Deutschland
Microtalc IT Extra: Talkum Füllstoff, Mondo Minerals, die Niederlande
CAB-O-SIL TS 720: Rheologie-Additiv, Cabot Aerogel, Deutschland
Tinuvin 292: Lichtstabilisator, BASF, Deutschland
Lösemittel: Solvesso 100, 1-Methoxy-2-propylacetat (MPA) und Butylacetat (BA), Azelis, Deutschland

**Methoden:**

Fumarsäurediethylester -Gehalte wurden quantitativ mit Hilfe einer GC-Methode mit einem internen Standard bestimmt. Es wurde ein 6890 Gaschromatograph der Fa. Agilent mit einer Standard-GC-Kapillare (100% Polysiloxan-Phase) und einem FID Detektor verwendet. Die Temperatur des Injektors (Splitausgang) war 180°C, als Trägergas wurde Helium verwendet. Die Bestimmungsgrenze diese Methode betrug 300 ppm.

GC-MS Messungen wurden mit einem 6890 Gaschromatograph und Massen Spektrum Detektor 5973 der Fa. Agilent mit Standard-Ionisierung (electron impact) mit 70eV, eine Standard-GC-Kapillare (100% Polysiloxan-Phase) und Split-Injektion bei 250°C Injektortemperatur durchgeführt. Ausgewertet wurden die % Flächen des Gaschromatograms.

Sämtliche Viskositatsmessungen erfolgten mit einem Physica MCR 51 Rheometer der Fa. Anton Paar Germany GmbH (Deutschland) nach DIN EN ISO 3219:1994-10 bei 23°C.

Die Hazen-Farbzahlen wurden an einem LICO 400 Farbmessgerät der Fa. Hach Lange GmbH (Deutschland), gemäß DIN EN ISO 6271:2016-05 ermittelt.

Die Bestimmung der Aminzahlen erfolgte titrimetrisch nach EN ISO 9702:1998 (Perchlorsäre-Methode) mit der Ausnahme, dass die Ergebnisse als Aminzahl angegeben wurden. Die Aminzahl in mg KOH/g wurde nach folgender Gleichung berechnet:

$$Aminzahl = \frac{(a-b) x\ 5{,}61}{E}$$

a: der Verbrauch, in Milliliter, an Perchlorsäure, Konzentration c = 0,1 mol/l (im Faktor 5,61 enthalten), im Hauptversuch,;
b: der Verbrauch, in Milliliter, an Perchlorsäure, Konzentration c = 0,1 mol/l (im Faktor 5,61 enthalten), im Blindversuch;
E: die Einwaage, in Gramm.

Die Bestimmung der Auslaufzeiten erfolgte nach DIN EN ISO 2431:2012-03, mit der Ausnahme, dass ein DIN 4 Auslaufbecher verwendet wurde.

Die Topfzeit wurde als die Zeit bis zur Verdopplung der Viskosität definiert.

Die Bestimmung der Trocknung erfolgte nach DIN EN ISO 9117-5:2012-11 auf Glas.

Die Bewitterung erfolgte nach DIN EN ISO 16474/2: 2014-03, Verfahren A, Zyklus 1 (102:18) bzw. DIN EN ISO 16474/3: 2014-03 Verfahren C Zyklus 4 (UVB). Es wurden Einschicht-Deckbeschichtungen auf angeschliffenen Aluminum getestet.

Die Bestimmung der Glanzwerte erfolgte mittels eins Reflektometers gemäß der Norm DIN EN ISO 2813: 2015-02.

Die Messung der Pendelhärte erfolgte nach DIN EN ISO 1522:2007-04 mit einem König Pendel auf Glas.

Die Spritzapplikation erfolgte mit einer Spritzpistole vom Typ SATAjet RP 3000 mit einer SATA Spritzdüse 1,6 mm bei einem Druck von ca. 2,1 bis 2,2 bar. Es wurde bei dem existierenden Raumklima (leichte Schwankungen in Temperatur und Luftfeuchtigkeit möglich) lackiert.

Salzsprühnebeltest erfolgte nach DIN EN ISO 9227:2012-09 entsprechend dem NSS-Verfahren auf nach ISO 17872 geritzten Proben. Es wurden Einschicht- und Zweischicht-Deckbeschichtungen auf einem Stahlblech (gestrahlt SA 2½) Die Bewertung der Blasenbildung erfolgte nach DIN EN ISO 4628-2:2016-07 (k.V. = keine Veränderung / Bl. = Blasenmenge / Gr. = Blasengröße). Die Enthaftung und Korrosion wurden nach ISO 4628-8:2012-3 beurteilt.

Der Kondenswassertest wurde nach DIN EN ISO 6270-2:2005-09 durchgeführt. Die Bewertung der Blasenbildung erfolgte nach DIN EN ISO 4628-2:2016-07 (k.V. = keine Veränderung / Bl. = Blasenmenge / Gr. = Blasengröße)

Gitterschnittprüfung erfolgte nach DIN EN ISO 2409:2006-13.

Die Stirnabzugprüfung wurde nach DIN EN ISO 4624:2016-08 Verfahren B durchgeführt. Es wurde die Zugspannung sowie die Art des Bruches nach folgenden Kriterien:

| | |
|---|---|
| A | Kohäsionsbruch im Substrat; |
| A/B | Adhäsionsbruch zwischen Substrat und erster Beschichtung; |
| B | Kohäsionsbruch in der ersten Beschichtung; |
| B/C | Adhäsionsbruch zwischen erster und zweiter Beschichtung; |

beurteilt.

**Herstellung pigmentierter Deckbeschichtungen**

Die Herstellung der Deckbeschichtungen erfolgte bei Raumtemperatur, indem die Bestandteile der Komponente 1 in ein gekühltes Gefäß (doppelwandiges Gefäß mit externer Kühlung durch kaltes Leitungswasser) gegeben wurde und bei ca. 600-800 U/min mit einem Dissolver vordispergiert und anschließend in einer Perlmühle angerieben und danach gesiebt wurden. Die Komponente 1 wurde nach einem Tag Reifezeit verarbeitet.

Danach wurde die Komponente 2 unter langsamen Rühren (ca. 600-800 U/min.) zugegeben und danach bei 2000 U/min für 1 Minute (Beschichtungen 1) bzw.2800 U/min. für 30 Minuten (Beschichtungen 2) dispergiert.

Einschichtaufbau

Die verwendeten Deckbeschichtungen wurden mit der beschriebenen Spritzapplikation auf ein Stahlblech (gestrahlt SA 2½) oder auf eine angeschliffene Aluminiumplatte aufgetragen und bei 23°C / 50% rel. Luftfeuchtigkeit getrocknet.

Zweischichtaufbau

Auf einem Stahlblech (gestrahlt SA 2½) wurde eine 1K PUR Zinkstaub- Grundbeschichtung nach Richtrezeptur der Fa. Covestro Deutschland AG mit der Bezeichnung RR 5280 mittels der beschriebenen Spritzapplikation aufgetragen. Nach Trocknung dieser Grundbeschichtung wurde die Deckbeschichtung ebenfalls mit der beschriebenen Spritzapplikation aufgetragen und bei 23°C / 50% rel. Luftfeuchtigkeit getrocknet.

**Polyasparaginsäureester PAS 1**

Kommerziell erhältlicher Polyasparaginsäureester der Fa. Covestro unter dem Namen Desmophen NH 1420.

Kenndaten:

| | |
|---|---|
| Monoamine der Formel (II) (GC-MS): | 4.0% |
| Fumarsäurediethylester (GC) | 2.9 Gew.-Prozent |
| Viskosität | 1220 mPas |
| Farbzahl | 27 APHA |
| Aminzahl | 201 mg KOH/g |

**Polyasparaginsäureester PAS 2**

341.8g PACM 20 wurden bei 23 °C unter trockenem Stickstoff und Rühren vorgelegt. Dazu wurden 560.0g Maleinsäurediethylester so zugetropft, dass die Temperatur nicht über 60 °C gestiegen ist. Nach der beendeten Zugabe wurde die Temperatur auf 45 °C eingestellt und der Ansatz wurde bei 45 °C 2 Stunden gerührt. Anschließend wurde der Ansatz bei 23°C 7 Wochen gelagert. Der Gehalt an Fumarsäurediethylester betrug nach der Lagerung 3.0 Gew.-Prozent. Fumarsäurediethylester wurde dann bei 120 °C und 0.2 mbar abdestilliert. Man erhielt ein farbhelles Produkt mit folgenden Kenndaten:

| | |
|---|---|
| Monoamine der Formel (II) (GC-MS): | 4.2% |

(fortgesetzt)

| | |
|---|---|
| Fumarsäurediethylester (GC) | 0.05 Gew.-Prozent |
| Viskosität | 1860 mPas |
| Farbzahl | 19 APHA |
| Aminzahl | 203 mg KOH/g |

**Polyasparaginsäureester PAS 3**

341.8g PACM 20 wurden bei 23 °C unter trockenem Stickstoff und Rühren vorgelegt. Dazu wurden 560.0g Maleinsäurediethylester so zugetropft, dass die Temperatur nicht über 60 °C gestiegen ist. Nach der beendeten Zugabe wurde die Temperatur auf 45 °C eingestellt und der Ansatz wurde bei 45 °C 2 Stunden gerührt. Anschließend wurde der Ansatz bei 23°C 9 Wochen gelagert. Der Gehalt an Fumarsäurediethylester betrug nach der Lagerung 2.7 Gew.-Prozent. Fumarsäurediethylester wurde dann bei 120 °C und 0.2 mbar abdestilliert. Man erhielt ein farbhelles Produkt mit folgenden Kenndaten:

| | |
|---|---|
| Monoamine der Formel (II) (GC-MS): | 5.3% |
| Fumarsäurediethylester (GC) | 0.09 Gew.-Prozent |
| Viskosität | 1810 mPas |
| Farbzahl | 27 APHA |
| Aminzahl | 206 mg KOH/g |

**Polyasparaginsäureester PAS 4**

341,8g PACM 20 wurden bei 23 °C unter trockenem Stickstoff und Rühren vorgelegt. Dazu wurden 567,6g Maleinsäurediethylester so zugetropft, dass die Temperatur nicht über 60 °C gestiegen ist. Nach der beendeten Zugabe wurde die Temperatur auf 45 °C eingestellt und der Ansatz wurde bei 45 °C zwei Stunden gerührt. Anschließend wurde der Ansatz bei 23°C 30 Stunden gelagert. Der Gehalt an Fumarsäurediethylester betrug nach der Lagerung 8,62 gew%. Fumarsäurediethylester wurde dann bei 120 °C und 0,2 mbar abdestilliert. Man erhielt ein farbhelles Produkt mit folgenden Kenndaten:

| | |
|---|---|
| Monoamine der Formel (II) (GC-MS): | 13,2% |
| Fumarsäurediethylester (Komponente A, GC) | < 0,03 gew% |
| Viskosität | 1650 mPas |
| Farbzahl | 5 APHA |
| Aminzahl | 213 mg KOH/g |

**Polyasparaginsäureester PAS 5**

341,8g PACM 20 wurden bei 23 °C unter trockenem Stickstoff und Rühren vorgelegt. Dazu wurden 1678,8g Maleinsäurediethylester so zugetropft, dass die Temperatur nicht über 60 °C gestiegen ist. Nach der beendeten Zugabe wurde die Temperatur auf 45 °C eingestellt und der Ansatz wurde bei 45 °C eine Stunde gerührt. Anschließend wurde der Ansatz bei 23°C 24 Stunden gelagert. Fumarsäurediethylester wurde dann bei 120 °C und 0,2 mbar abdestilliert. Man erhielt ein farbhelles Produkt mit folgenden Kenndaten:

| | |
|---|---|
| Monoamine der Formel (II) (GC-MS): | 9,3% |
| Fumarsäurediethylester (Komponente A, GC) | 0,07 gew% |
| Viskosität | 1710 mPas |
| Farbzahl | 21 APHA |
| Aminzahl | 209 mg KOH/g |

Die Polyasparaginsäureester PAS 1, 2, 3 und PAS 5 wurden zu Deckbeschichtungen, wie in den Tabelle 1 und 7 dargestellt, formuliert.

Tabelle 1. Zusammensetzung der Deckbeschichtungen 1

| Komponente 1 (gew%) | Beispiel 1 (Vergleich) | Beispiel 2 (erfindungs-gemäß) | Beispiel 3 (erfindungs-gemäß) | Beispiel 4 (Vergleich) | Beispiel 5 (erfindungs-gemäß) | Beispiel 6 (erfindungs-gemäß) | Beispiel 7 (Vergleich) | Beispiel 8 (erfindungsgemäß) |
|---|---|---|---|---|---|---|---|---|
| PAS 1 | 27,7 | | | 27,9 | | | 27,3 | |
| PAS 2 | | 27,7 | | | 27,9 | | | |
| PAS 3 | | | 27,7 | | | 27,9 | | |
| PAS 5 | | | | | | | | 25,9 |
| UOP-L Pulver | 3,0 | 3,0 | 3,0 | 3,0 | 3,0 | 3,0 | 2,8 | 2,7 |
| MPA/BA 1:1 | 7,9 | 7,9 | 7,9 | 7,7 | 7,7 | 7,7 | 7,5 | 7,3 |
| BYK A 530 | 0,4 | 0,4 | 0,4 | 0,4 | 0,4 | 0,4 | 0,4 | 0,4 |
| Disperbyk 163 | 1,4 | 1,4 | 1,4 | 1,4 | 1,4 | 1,4 | 1,3 | 1,3 |
| Titandioxid R-KB-4 | 33,7 | 33,7 | 33,7 | 18,1 | 18,1 | 18,1 | 17,6 | 17,1 |
| Heucophos ZPA | | | | 11,3 | 11,3 | 11,3 | 11,0 | 10,6 |
| Schwerspat EWO | | | | 4,1 | 4,1 | 4,1 | 4,0 | 3,9 |
| Tinuvin 292 | 0,7 | 0,7 | 0,7 | 0,7 | 0,7 | 0,7 | 0,7 | 0,6 |
| | | | | | | | | |
| Komponente 2 (gew%) | | | | | | | | |
| Desmodur N 3600 (80% in MPA/BA 1:1) | 25,2 | 25,2 | 25,2 | 25,4 | 25,4 | 25,4 | | |
| Desmodur XP 2489 (80% in MPA/BA 1:1) | | | | | | | 27,4 | 30,2 |
| | 100,0 | 100,0 | 100,0 | 100,0 | 100,0 | 100,0 | 100,0 | 100,0 |

Die Topfzeit und die Trocknung der Deckbeschichtungen aus den Beispielen 1 bis 8 sind in den Tabellen 2 und 3 zusammengefasst.

Tabelle 2. Trocknung und Topfzeit der Deckbeschichtungen aus den Beispielen 1 bis 6.

| | | **Beispiel 1** | **Beispiel 2** | **Beispiel 3** | **Beispiel 4** | **Beispiel 5** | **Beispiel 6** |
|---|---|---|---|---|---|---|---|
| **Trocknung** 23°C / 50% rel. Luftfeuchtigkeit 150μm nass | | | | | | | |
| | T1 | 30 min | 15 min | 15 min | 30 min | 15 min | 15 min |
| | T2 | 45 min | 30 min | 30 min | 30 min | 30 min | 30 min |
| | T3 | 45 min | 45 min | 30 min | 45 min | 45 min | 45 min |
| | T4 | 60 min | 45 min | 45 min | 45 min | 45 min | 45 min |
| | T6 | 60 min | 45 min | 45 min | 45 min | 45 min | 45 min |
| | | | | | | | |
| **Auslaufszeit** 23°C / 50% rel. Luftfeuchtigkeit | | | | | | | |
| | 0 min | 30 sec | 30 sec | 30 sec | 30 sec | 30 sec | 32 sec |
| | 15min | 38 sec | 33 sec | 33 sec | 39 sec | 37 sec | 37 sec |
| | 30min | 45 sec | 37 sec | 37 sec | 54 sec | 44 sec | 46 sec |
| | 45min | 60 sec | 42 sec | 38 sec | 74 sec | 57 sec | 58 sec |
| | 60min | 69 sec | 45 sec | 45 sec | 95 sec | 68 sec | 69 sec |
| | 75min | 87 sec | 48 sec | - | >2min | 80 sec | 79 sec |
| | 90min | | 60 sec | 66 sec | - | >2 min | >2min |

Tabelle 3. Trocknung und Topfzeit der Deckbeschichtungen aus den Beispielen 7 und 8.

| | | **Beispiel 7** | **Beispiel 8** |
|---|---|---|---|
| **Trocknung** 23°C / 50% rel. Luftfeuchtigkeit 150μm nass | | | |
| | T1 | 30 min | 30 min |
| | T2 | 45 min | 45 min |
| | T3 | 45 min | 45 min |
| | T4 | 60 min | 60 min |
| | T6 | 60 min | 60 min |
| | | | |
| **Auslaufszeit** 23°C / 50% rel. Luftfeuchtigkeit | | | |
| | 0 min | 36 sec | 30 sec |
| | 15min | 45 sec | 39 sec |
| | 30min | 48 sec | 40 sec |
| | 45min | 60 sec | 48 sec |
| | 60min | 75 sec | 60 sec |

Wie aus den Tabelle 2 ersichtlich ist, weisen die erfindungsgemäßen Beschichtungszusammensetzungen eine

schnellere Trocknung und gleichzeitig eine längere Topfzeit im Vergleich zu der Beschichtungszusammensetzung auf Basis herkömmlicher Polyasparaginsäreester auf. Die erfindungsgemäßen Beschichtungszusammensetzungen dargestellt in der Tabelle 3 weisen auch eine längere Topfzeit bei gleichbleibenden schnellen Trockung aus.

Die ausgehärteten Deckbeschichtungen aus den Beispielen 4, 5, 7, und 8 wurden auch der Bewitterung unterzogen. Die Ergebnisse sind in den Tabellen 4 bis 6 dargestellt.

Tabelle 4. UV-B Test der Beschichtungen aus den Beispielen 4 und 5.

| | Start | | 500 h | | 1000 h | | Delta E | 1500 h | | Delta E |
|---|---|---|---|---|---|---|---|---|---|---|
| **Glanz** | 20° | 60° | 20° | 60° | 20° | 60° | | 20° | 60° | |
| **Beispiel 4** | 96 | 98 | 60 | 88 | 58 | 87 | 0.5 | 45 | 81 | 0.6 |
| **Beispiel 5** | 94 | 98 | 70 | 91 | 66 | 89 | 0.5 | 46 | 82 | 0.6 |

Tabelle 5. Xenon Test der Beschichtungen aus den Beispielen 4 und 5.

| | Start | | 500 h | | 1000 h | | Delta E | 1500 h | | Delta E |
|---|---|---|---|---|---|---|---|---|---|---|
| **Glanz** | 20° | 60° | 20° | 60° | 20° | 60° | | 20° | 60° | |
| **Beispiel 4** | 94 | 97 | 82 | 93 | 69 | 91 | 0,3 | 54 | 87 | 0,2 |
| **Beispiel 5** | 94 | 97 | 87 | 95 | 76 | 93 | 0,2 | 72 | 92 | 0,2 |

| | 2000h | | 2500 h | | 3000 h | | Delta E | 3500 h | | Delta E |
|---|---|---|---|---|---|---|---|---|---|---|
| **Glanz** | 20° | 60° | 20° | 60° | 20° | 60° | | 20° | 60° | |
| **Beispiel 4** | 48 | 84 | 44 | 82 | 42 | 81 | 0,3 | 40 | 80 | 0,3 |
| **Beispiel 5** | 66 | 90 | 60 | 88 | 56 | 87 | 0,3 | 53 | 86 | 0,3 |

Tabelle 6. Xenon Test der Beschichtungen aus den Beispielen 7 und 8.

| | Start | | 500 h | | 1000 h | | 1500 h | |
|---|---|---|---|---|---|---|---|---|
| **Glanz** | 20° | 60° | 20° | 60° | 20° | 60° | 20° | 60° |
| **Beispiel 7** | 88 | 91 | 84 | 94 | 78 | 93 | 73 | 92 |
| **Beispiel 8** | 90 | 94 | 85 | 94 | 78 | 93 | 75 | 92 |

| | 3000h | | 4000 h | | 5000 h | | Delta E |
|---|---|---|---|---|---|---|---|
| **Glanz** | 20° | 60° | 20° | 60° | 20° | 60° | |
| **Beispiel 7** | 66 | 89 | 61 | 84 | 48 | 78 | 0,5 |
| **Beispiel 8** | 68 | 89 | 64 | 86 | 54 | 82 | 0,2 |

Wie die Bewitterungsergebnisse beweisen, zeigen die erfindungsgemäßen Beschichtungszusammensetzungen einen langsameren Glanz-Abfall und einen höheren oder mindestens gleich hohen Rest-Glanz im Vergleich zu der Beschichtungszusammensetzung auf Basis herkömmlicher Polyasparaginsäreester.

Tabelle 7. Zusammensetzung der Deckbeschichtungen 2

| Komponente 1 (gew%) | Beispiel 9 (Vergleich) | Beispiel 10 (erfindungsgemäß) | Beispiel 11 (erfindungsgemäß) | Beispiel 12 (Vergleich) | Beispiel 13 (erfindungsgemäß) | Beispiel 14 (erfindungsgemäß) |
|---|---|---|---|---|---|---|
| PAS 1 | 29,33 | | | 28,11 | | |
| PAS 5 | | 28,81 | | | 27,65 | |
| PAS 3 | | | 29,21 | | | 28,03 |
| Disperbyk 163 | 1,38 | 1,36 | 1,38 | 0,95 | 0,93 | 0.95 |
| BYK A 530 | 0,64 | 0,63 | 0,64 | 0,95 | 0,93 | 0,95 |
| Tinuvin 292 | 0,64 | 0,63 | 0,64 | 0,59 | 0,58 | 0,59 |
| UOP-L Pulver | 3,04 | 3,05 | 3,06 | 2,36 | 2,36 | 2,36 |
| Chromoxid Grün GN | 7,70 | 7,71 | 7,71 | 6,09 | 5,10 | 6,09 |
| Titandioxid R-KB-4 | 11,12 | 11,12 | 11,12 | 8,78 | 8,79 | 8,78 |
| Schwerspat EWO | 4,21 | 4,22 | 4,21 | 16,38 | 16,41 | 16,38 |
| Heucophos ZPA | 11,47 | 11,48 | 11,47 | | | |
| Microtalc IT Extra | | | | 4,67 | 4,67 | 4,67 |
| Eisenoxid Gelb 415 | 1,38 | 1,39 | 1,39 | 1,09 | 1,09 | 1,09 |
| CAB-O-SIL TS 720 | 0,94 | 0,95 | 0,95 | 1,09 | 1,09 | 1,09 |
| BA | 3,41 | 3,36 | 3,40 | | | |
| MPA | 3,41 | 3,36 | 3,40 | 8,44 | 8,31 | 8,42 |
| | | | | | | |
| Komponente 2 (gew%) | | | | | | |
| Desmodur N 3600 | 21,33 | 21,94 | 21,45 | 20,51 | 21,07 | 20,60 |
| | 100,00 | 100,00 | 100,00 | 100,00 | 100,00 | 100,00 |

Tabelle 8. Trocknung und Topfzeit der Deckbeschichtungen aus den Beispielen 9 bis 14.

| | Beispiel 9 (Vergleich) | | | Beispiel 10 (erfindungsgemäß) | | | Beispiel 11 (erfindungsgemäß) | | | Beispiel 12 (Vergleich) | | | Beispiel 13 (erfindungsgemäß) | | | Beispiel 14 (erfindungsgemäß) | | |
|---|---|---|---|---|---|---|---|---|---|---|---|---|---|---|---|---|---|---|
| **Trocknung** 23°C / 50% rel. Luftfeuchtigkeit 150μm nass | | | | | | | | | | | | | | | | | | |
| **T1** | 35 min. | | | 30 min. | | | 20 min. | | | 25 min | | | 25 min | | | 25 min | | |
| **T6** | 51 min. | | | 51 min. | | | 42 min. | | | 1h 3min | | | 1h | | | 49 min | | |
| **Pendelhärte:** | | | | | | | | | | | | | | | | | | |
| **nach 1d** | 141 sec | | | 153 sec | | | 153 sec | | | 117 sec | | | 124 sec | | | 112 sec | | |
| **nach 3d** | 149 sec | | | 157 sec | | | 157 sec | | | 129 sec | | | 132 sec | | | 130 sec | | |
| **nach 7d** | 152 sec | | | 157 sec | | | 158 sec | | | 141 sec | | | 145 sec | | | 142sec | | |
| **Topfzeit:** 23°C / 50% rel. Luftfeuchtigkeit | 1h 6 min. | | | 1h 20 min. | | | 1h 30 min. | | | 2h | | | 2h 10 min | | | 3h | | |
| **Chemiekalienbeständigkeit:** | | | | | | | | | | | | | | | | | | |
| **Beanspruchung (min.)** | 1 | 5 | 10 | 1 | 5 | 10 | 1 | 5 | 10 | 1 | 5 | 10 | 1 | 5 | 10 | 1 | 5 | 10 |
| **Solvesso 100** | 0 | 0 | 0 | 0 | 0 | 0 | 0 | 0 | 0 | 0 | 0 | 0 | 0 | 0 | 0 | 0 | 0 | 0 |
| **MPA** | 0 | 0-1 | 1 | 0 | 0 | 0 | 0 | 0 | 0 | 0 | 0 | 1 | 0 | 0 | 0 | 0 | 1 | 1-2 |
| **Aceton** | 1 | 3 | 4-5 | 0-1 | 4 | 4-5 | 0-1 | 4 | 4-5 | 1-2 | 4 | 4 | 1-2 | 2-3 | 4 | 1-2 | 4 | 4 |
| **Schwefelsäure, 10%ig** | 0 | 0 | 0 | 0 | 0 | 0 | 0 | 0 | 0 | 0 | 0 | 0 | 0 | 0 | 0 | 0 | 0 | 0 |

(fortgesetzt)

| **Chemiekalienbeständigkeit:** | | | | | | | | | | | | | | | | | | |
|---|---|---|---|---|---|---|---|---|---|---|---|---|---|---|---|---|---|---|
| **Natronlauge, 10 %ig** | 0 | 0 | 0 | 0 | 0 | 0 | 0 | 0 | 0 | 0 | 0 | 0 | 0 | 0 | 0 | 0 | 0 | 0 |

Tabelle 8 bestätigt dass die erfindungsgemäßen Beschichtungszusammensetzungen sich nicht nur durch eine gute Chemikalienbeständigkeit sondern auch durch eine schnellere Trocknung und gleichzeitig eine längere Topfzeit im Vergleich zu der Beschichtungszusammensetzung auf Basis herkömmlicher Polyasparaginsäreester auszeichnen.

Die ausgehärteten Beschichtungen 9 bis 14 wurden dann sowohl einem Kondenswassertest als auch einem Salzsprühnebeltest unterzogen.

Tabelle 9. Salzsprühnebeltest und Kondenswassertest der Deckbeschichtungen aus den Beispielen 9 bis 11 (Aufbau: Einschicht auf Stahl, gestrahlt Sa 2 1/2).

| | Beispiel 9 (Vergleich) | Beispiel 10 (erfindungsgemäß) | Beispiel 11 (erfindungsgemäß) |
|---|---|---|---|
| **Salzsprühnebeltest:** | | | |
| **Schichtdicken (μm) ca.** | 130-150 | 121-141 | 137-140 |
| **Ausgangswert:** | Struktur, Stippen 1 | Struktur, Stippen 1 | Struktur, Stippen 1 |
| **n. 7d** | keine Veränderung | keine Veränderung | keine Veränderung |
| **n. 14d** | Rostaufwurf am Ritz = 1 | Rostaufwurf am Ritz = 1 | Rostaufwurf am Ritz = 1 |
| **n. 21d** | Korrosionsgrad am Ritz in mm =1 | Korrosionsgrad am Ritz in mm =2 | Korrosionsgrad am Ritz in mm =1 |
| **n. 28d** | Korrosionsgrad am Ritz in mm =2 | Korrosionsgrad am Ritz in mm =2 | Korrosionsgrad am Ritz in mm =2 |
| **n. 35d** | Korrosionsgrad am Ritz in mm =2 | Korrosionsgrad am Ritz in mm =2 | Korrosionsgrad am Ritz in mm =2 |
| **n. 42d** | Korrosionsgrad am Ritz in mm =2 | Korrosionsgrad am Ritz in mm =2 | Korrosionsgrad am Ritz in mm =2 |
| **n. 49d** | Korrosionsgrad am Ritz in mm =3 | Korrosionsgrad am Ritz in mm =3 | Korrosionsgrad am Ritz in mm =2 |
| **n. 56d** | Korrosionsgrad am Ritz in mm =3 | Korrosionsgrad am Ritz in mm =3 | Korrosionsgrad am Ritz in mm =3 |
| **n. 60d** | Korrosionsgrad am Ritz in mm =3, 0,1 mm Rotrost | Korrosionsgrad am Ritz in mm =3, 0,1mm Rotrost | Korrosionsgrad am Ritz in mm =3, 0,1mm Rotrost |
| **Haftung n.84d + 24h Regeneration** | Gitterschnitt = 2-3 | Gitterschnitt = 2 | Gitterschnitt = 1-2 |
| **Stirnabzug:** | 4,6 $N/mm^2$ | 4,3 $N/mm^2$ | 4,1 $N/mm^2$ |
| **Bruchbild:** | A/B=100% | A/B=100% | A/B=100% |
| **Kondenswassertest:** | | | |
| **Schichtdicken (μm) ca.** | 137-150 | 126-133 | 137-155 |
| **Ausgangswert:** | Struktur, Stippen 1 | Struktur, Stippen 1 | Struktur, Stippen 1 |
| **n. 42d** | keine Veränderung | keine Veränderung | keine Veränderung |

Tabelle 10. Salzsprühnebeltest und Kondenswassertest der Deckbeschichtungen aus den Beispielen 12 bis 14 (Aufbau: Zweischicht auf Stahl, gestrahl Sa 21/2).

| | Beispiel 12 (Vergleich) | Beispiel 13 (erfindungsgemäß) | Beispiel 14 (erfindungsgemäß) |
|---|---|---|---|
| **Salzsprühnebeltest:** | | | |
| **Schichtdicken (μm) ca.** | 96-109/315 | 101-111/319 | 103-113/272-299 |

(fortgesetzt)

| Ausgangswert: | Struktur | Struktur | Struktur |
|---|---|---|---|
| **n. 7d** | keine Veränderung | keine Veränderung | keine Veränderung |
| **n. 14d** | keine Veränderung | keine Veränderung | keine Veränderung |
| **n. 21d** | Korrosionsgrad am Ritz in mm =1 | Korrosionsgrad am Ritz in mm =1 | Korrosionsgrad am Ritz in mm =2 |
| **n. 28d** | Korrosionsgrad am Ritz in mm =1 | Korrosionsgrad am Ritz in mm =1 | Korrosionsgrad am Ritz in mm =2 |
| **n. 35d** | Korrosionsgrad am Ritz in mm =1 | Korrosionsgrad am Ritz in mm =2 | Korrosionsgrad am Ritz in mm =2 |
| **n. 42d** | Korrosionsgrad am Ritz in mm =1 | Korrosionsgrad am Ritz in mm =2 | Korrosionsgrad am Ritz in mm =2 |
| **n. 49d** | Korrosionsgrad am Ritz in mm =2 | Korrosionsgrad am Ritz in mm =2 | Korrosionsgrad am Ritz in mm =3 |
| **n. 56d** | Korrosionsgrad am Ritz in mm =2 | Korrosionsgrad am Ritz in mm =3 | Korrosionsgrad am Ritz in mm =3 |
| **n. 60d** | Korrosionsgrad am Ritz in mm =3 | Korrosionsgrad am Ritz in mm =3 | Korrosionsgrad am Ritz in mm =3, 0,1mm Rotrost |
| **Haftung n.84d + 24h Regeneration** | Gitterschnitt = 0 | Gitterschnitt = 0 | Gitterschnitt = 0 |
| **Stirnabzug:** | 7,2 $N/mm^2$ | 6,7 $N/mm^2$ | 7,4 $N/mm^2$ |
| **Bruchbild:** | Y=5%, A/B=10%, B=75% | Y=10%, B=90% | Y=20%, B=80% |
| **Kondenswassertest:** | | | |
| **Schichtdicken (μm) ca.** | 96-107/255-296 | 102-106/305-323 | 96-113/270-280 |
| **Ausgangswert:** | Struktur | Struktur, Stippen 1 | Struktur, Stippen 1 |
| **n. 42d** | keine Veränderung | keine Veränderung | keine Veränderung |

Diese Ergebnisse zeigen, dass die erfindungsgemäßen Beschichtungszusammensetzungen dazu beitragen, widerstandsfähige Korrosionsschutzformulierungen zu erhalten.

Die ausgehärteten Beschichtungen 9 bis 14 wurden anschließend einer Bewitterung ausgesetzt.

Tabelle 11. UV-A und UV-B Test der Beschichtungen aus den Beispielen 9 bis 11.

| UV-A | **Start** | | **500 h** | | **750 h** | | **Delta E** | **1000 h** | | **Delta E** |
|---|---|---|---|---|---|---|---|---|---|---|
| **Glanz** | 20° | 60° | 20° | 60° | 20° | 60° | | 20° | 60° | |
| **Beispiel 9** | 38 | 82 | 25 | 73 | 28 | 75 | 0,4 | 27 | 75 | 0,5 |
| **Beispiel 10** | 45 | 87 | 30 | 78 | 27 | 75 | 0,4 | 26 | 74 | 0,5 |
| **Beispiel 11** | 47 | 86 | 28 | 75 | 29 | 77 | 0,4 | 28 | 76 | 0,5 |

| UV-A | **1250h** | | **1500 h** | | **1750 h** | | **Delta E** | **2000 h** | | **Delta E** |
|---|---|---|---|---|---|---|---|---|---|---|
| **Glanz** | 20° | 60° | 20° | 60° | 20° | 60° | | 20° | 60° | |
| **Beispiel 9** | 25 | 73 | 25 | 73 | 25 | 73 | 0,9 | 24 | 72 | 0,9 |
| **Beispiel 10** | 26 | 74 | 25 | 72 | 25 | 72 | 0,9 | 25 | 72 | 0,9 |
| **Beispiel 11** | 26 | 74 | 27 | 74 | 26 | 74 | 0,9 | 25 | 73 | 0,9 |

| UV-B | **Start** | | **500 h** | | **750 h** | | **Delta E** | **1000 h** | | **Delta E** |
|---|---|---|---|---|---|---|---|---|---|---|
| **Glanz** | 20° | 60° | 20° | 60° | 20° | 60° | | 20° | 60° | |
| **Beispiel 9** | 43 | 84 | 21 | 66 | 23 | 70 | 0,8 | 24 | 73 | 0,8 |
| **Beispiel 10** | 48 | 82 | 26 | 76 | 26 | 75 | 0,8 | 22 | 72 | 0,8 |
| **Beispiel 11** | 42 | 87 | 23 | 73 | 26 | 71 | 0,8 | 24 | 71 | 0,8 |

| UV-B | **1250h** | | **1500 h** | | **1750 h** | | **Delta E** | **2000 h** | | **Delta E** |
|---|---|---|---|---|---|---|---|---|---|---|
| **Glanz** | 20° | 60° | 20° | 60° | 20° | 60° | | 20° | 60° | |
| **Beispiel 9** | 21 | 69 | 17 | 64 | <10 | 53 | 1,5 | <10 | 47 | 1,4 |
| **Beispiel 10** | 17 | 64 | 21 | 68 | 23 | 70 | 1,5 | 24 | 71 | 1,4 |
| **Beispiel 11** | 18 | 66 | 18 | 58 | 14 | 53 | 1,5 | 11 | 48 | 1,4 |

Tabelle 12. UV-A und UV-B Test der Beschichtungen aus den Beispielen 12 bis 14.

| UV-A | Start | | 500 h | | 750 h | | Delta E | 1000 h | | Delta E |
|---|---|---|---|---|---|---|---|---|---|---|
| **Glanz** | 20° | 60° | 20° | 60° | 20° | 60° | | 20° | 60° | |
| **Beispiel 12** | 49 | 88 | 21 | 69 | 24 | 72 | 0,7 | 21 | 69 | 0,8 |
| **Beispiel 13** | 59 | 91 | 26 | 76 | 27 | 72 | 0,8 | 23 | 71 | 0,8 |
| **Beispiel 14** | 58 | 90 | 26 | 73 | 28 | 75 | 0,7 | 21 | 68 | 0,8 |

| UV-A | 1250h | | 1500 h | | 1750 h | | Delta E | 2000 h | | Delta E |
|---|---|---|---|---|---|---|---|---|---|---|
| **Glanz** | 20° | 60° | 20° | 60° | 20° | 60° | | 20° | 60° | |
| **Beispiel 12** | 19 | 67 | 14 | 58 | 11 | 53 | 0,7 | <10 | 43 | 1,0 |
| **Beispiel 3** | 22 | 72 | 16 | 63 | 13 | 56 | 0,8 | <10 | 54 | 1,1 |
| **Beispiel 114** | 19 | 67 | 16 | 61 | 11 | 56 | 0,7 | <10 | 49 | 1,0 |

| UV-B | Start | | 500 h | | 750 h | | Delta E | 1000 h | | Delta E |
|---|---|---|---|---|---|---|---|---|---|---|
| **Glanz** | 20° | 60° | 20° | 60° | 20° | 60° | | 20° | 60° | |
| **Beispiel 12** | 58 | 90 | 17 | 64 | 16 | 61 | 0,8 | 21 | 69 | 0,9 |
| **Beispiel 13** | 57 | 89 | 19 | 67 | 18 | 63 | 0,9 | 23 | 71 | 0,7 |
| **Beispiel 14** | 57 | 87 | 18 | 64 | 18 | 63 | 0,8 | 21 | 68 | 0,8 |

| UV-B | 1250h | | 1500 h | | 1750 h | | Delta E | 2000 h | | Delta E |
|---|---|---|---|---|---|---|---|---|---|---|
| **Glanz** | 20° | 60° | 20° | 60° | 20° | 60° | | 20° | 60° | |
| **Beispiel 12** | 17 | 62 | 20 | 66 | 18 | 63 | 1,2 | 21 | 68 | 1,5 |
| **Beispiel 13** | 21 | 68 | 22 | 68 | 21 | 67 | 1,0 | 24 | 70 | 1,4 |
| **Beispiel 14** | 20 | 66 | 22 | 69 | 20 | 65 | 1,2 | 25 | 70 | 1,7 |

Auch die auf erfindungsgemäßen Beschichtungszusammensetzungen basierenden Deckbeschichtungen 2 charakterisieren sich durch einen langsameren Glanz-Abfall und einen höheren oder mindestens gleich hohen Rest-Glanz im Vergleich zu den Deckbeschichtungen 2 auf Basis herkömmlicher Polyasparaginsäreester.

## Patentansprüche

**1.** Zweikomponentige Beschichtungszusammensetzungen (2K-Beschichtungsmittel), enthaltend

a) mindestens eine Polyasparaginsaureester-haltige Komponente A,
b) mindestens eine Polyisocyanatkomponente B
c) gegebenenfalls eine oder mehrere, von A verschiedene, gegenüber Isocyanatgruppen reaktionsfähige Komponenten C,
d) mindestens ein anorganisches und/oder organisches Pigment, bevorzugt in einem Anteil von mindestens 3 Gewichts-%, bezogen auf das Gesamtgewicht der zweikomponentigen Zusammensetzung, (Komponente D1) und
gegebenenfalls weitere Hilfs- und Zusatzstoffe (Komponente D2),

wobei Komponente A Zusammensetzungen entspricht, enthaltend
einen oder mehrere Polyasparaginsäureester der allgemeinen Formel (I)

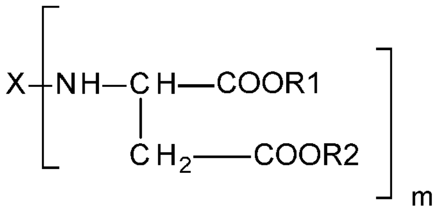

(I),

in welcher

X für einen m-wertigen, gegebenenfalls ein oder mehrere Heteroatome enthaltenden organischen Rest steht, wie er durch Entfernung der primären Aminogruppen aus einem entsprechenden, (cyclo)aliphatisch bzw. araliphatisch gebundene primäre Aminogruppen aufweisenden Polyamin des Molekulargewichtsbereichs 60 bis 6000 g/mol erhalten werden kann, und der weitere, gegenüber Isocyanatgruppen reaktive und/oder bei Temperaturen bis 100°C inerte funktionelle Gruppen enthalten kann,
R1 und R2 für gleiche oder verschiedene organische Reste, mit je 1 bis 18 Kohlenstoffatomen stehen,
m für eine ganze Zahl >1 steht,

und gegebenenfalls einen oder mehrere Polyasparaginsäureester mit primärer Aminogruppe der allgemeinen Formel (II)

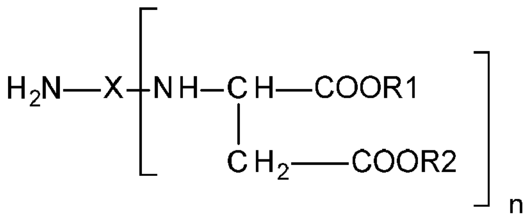

(II)

in welcher

n für m-1 steht,
X, Reste R1 und R2 die oben genannten Bedeutungen haben,

**dadurch gekennzeichnet, dass** in Komponente A Fumarsäuredialkylester in einer Menge von 0,01 bis 1,2 Gew.-%, bezogen auf das Gesamtgewicht der Komponente A, vorliegen.

2. Zweikomponentige Beschichtungszusammensetzungen (2K-Beschichtungsmittel) gemäß Anspruch 1, **dadurch gekennzeichnet, dass** in Komponente A Fumarsäuredialkylester in einer Menge von 0,01 bis 1 Gew.-%, bezogen auf das Gesamtgewicht der Komponente A, vorliegen.

3. Zweikomponentige Beschichtungszusammensetzungen (2K-Beschichtungsmittel) gemäß Anspruch 1, **dadurch gekennzeichnet, dass** in Komponente A Fumarsäuredialkylester in einer Menge von 0,01 bis 0,1 Gew.-%, bezogen auf das Gesamtgewicht der Komponente A, vorliegen.

4. Zweikomponentige Beschichtungszusammensetzungen (2K-Beschichtungsmittel) gemäß einem der Ansprüche 1 bis 3, wobei die Polyasparaginsaureester-haltige Komponente A keine Verbindungen der Formel II enthält.

5. Zweikomponentige Beschichtungszusammensetzungen (2K-Beschichtungsmittel) gemäß einem der Ansprüche 1 bis 3, wobei die Polyasparaginsaureester-haltige Komponente A Verbindungen der Formel II enthält.

6. Zweikomponentige Beschichtungszusammensetzungen (2K-Beschichtungsmittel) gemäß einem der Ansprüche 1 bis 3 oder 5, wobei die Polyasparaginsaureester-haltige Komponente A eine oder mehrere Verbindungen der Formel

II enthält und der Anteil der Verbindung/en der Formel II mindestens 0,1 % der GC Oberfläche (gemessen als Flächen-% im Gas Chromatogram) beträgt, wobei die Summe der GC Oberflächen der Verbindungen der beiden allgemeinen Formeln (I) und (II) 100% beträgt.

**7.** Zweikomponentige Beschichtungszusammensetzungen (2K-Beschichtungsmittel) gemäß einem der Ansprüche 1 bis 3 oder 5, wobei die Polyasparaginsaureester-haltige Komponente A eine oder mehrere Verbindungen der Formel II enthält und der Anteil der Verbindung/en der Formel II mindestens 1 % der GC Oberfläche (gemessen als Flächen-% im Gas Chromatogram) beträgt, wobei die Summe der GC Oberflächen der Verbindungen der beiden allgemeinen Formeln (I) und (II) 100% beträgt.

**8.** Zweikomponentige Beschichtungszusammensetzungen (2K-Beschichtungsmittel) gemäß einem der Ansprüche 5 bis 7, wobei der Anteil der Verbindung/en der Formel II maximal 20 % der GC Oberfläche beträgt.

**9.** Verfahren zum Herstellen einer Beschichtung auf einem Substrat, welches mindestens folgende Schritte umfasst:

i) Aufbringen einer zweikomponentigen Beschichtungszusammensetzung gemäß einem der Ansprüche 1 bis 8 auf mindestens einen Teil eines zu beschichtenden Substrats und
ii) Härten der Beschichtungszusammensetzung aus Schritt i).

**10.** Substrate beschichtet mit einer Beschichtung, erhältlich gemäß einem Verfahren nach Anspruch 9.

**11.** Verfahren zum Herstellen einer Beschichtung auf einem Substrat gemäß Anspruch 9, oder Substrate beschichtet mit einer Beschichtung gemäß Anspruch 10, **dadurch gekennzeichnet, dass** es sich bei der Beschichtung um eine Deckbeschichtung handelt.

**12.** Verwendung einer zweikomponentigen Beschichtungszusammensetzung (2K-Beschichtungsmittel) gemäß einem der Ansprüche 1 bis 8 zur Herstellung von Beschichtungen, oder Verfahren zum Herstellen einer Beschichtung auf einem Substrat gemäß Anspruch 9 oder 11, oder Substrate beschichtet mit einer Beschichtung gemäß Anspruch 10 oder 11, wobei die Beschichtungen im Bereich des Korrosionschutzes oder der allgemeinen Industrielackierung verwendet werden oder es sich um ACE-Beschichtungen (Agriculture, Construction and Earth moving equipment) handelt.

**13.** Verwendung einer zweikomponentigen Beschichtungszusammensetzung (2K-Beschichtungsmittel) gemäß einem der Ansprüche 1 bis 8 zur Herstellung von Glanz-stabilen Beschichtungen.

Europäisches Patentamt
European Patent Office
Office européen des brevets

# EUROPÄISCHER RECHERCHENBERICHT

Nummer der Anmeldung
EP 19 15 8883

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | US 2005/059792 A1 (ROESLER RICHARD R [US] ET AL) 17. März 2005 (2005-03-17)<br>* Seite 3, Absatz [0053] *<br>* Seite 4; Beispiel 1 *<br>* Seite 4; Beispiel 4 *<br>* Seite 3, Absatz [0048] *<br>----- | 1-4,9-13<br>1-13 | INV.<br>C08G18/72<br>C08G18/73<br>C08G18/75<br>C08G18/79<br>C08G18/38<br>C09D175/02<br>C08K3/22<br>C08K3/013 |
| A | DE 10 2012 203280 A1 (DRESDNER LACKFABRIK NOVATIC GMBH & CO KG [DE]) 5. September 2013 (2013-09-05)<br>* Seite 8, Zeile 17 - Zeile 22 *<br>----- | 1-13 | |
| Y | WO 01/07504 A1 (BAYER AG [US]; ROESLER RICHARD R [US]) 1. Februar 2001 (2001-02-01)<br>* Seite 6, Absatz [0054] - Absatz [0055]; Tabelle 1 *<br>----- | 1-4,8-13 | |
| Y | US 2017/058146 A1 (ENKISCH-KRUG CHARLOTTE [DE] ET AL) 2. März 2017 (2017-03-02)<br>* Seite 10; Beispiele 2,3 *<br>----- | 5-8 | RECHERCHIERTE SACHGEBIETE (IPC)<br>C08G<br>C09D<br>C08K |

Der vorliegende Recherchenbericht wurde für alle Patentansprüche erstellt

1

| Recherchenort | Abschlußdatum der Recherche | Prüfer |
|---|---|---|
| München | 12. August 2019 | Wohnhaas, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 19 15 8883

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-08-2019

| Im Recherchenbericht angeführtes Patentdokument | Datum der Veröffentlichung | Mitglied(er) der Patentfamilie | Datum der Veröffentlichung |
|---|---|---|---|
| US 2005059792 A1 | 17-03-2005 | CA 2481725 A1 | 17-03-2005 |
| | | CN 1616513 A | 18-05-2005 |
| | | EP 1516886 A1 | 23-03-2005 |
| | | EP 1516887 A1 | 23-03-2005 |
| | | JP 2005089757 A | 07-04-2005 |
| | | KR 20050028804 A | 23-03-2005 |
| | | US 2005059791 A1 | 17-03-2005 |
| | | US 2005059792 A1 | 17-03-2005 |
| DE 102012203280 A1 | 05-09-2013 | KEINE | |
| WO 0107504 A1 | 01-02-2001 | AT 251195 T | 15-10-2003 |
| | | AU 6226800 A | 13-02-2001 |
| | | CA 2380271 A1 | 01-02-2001 |
| | | DE 60005698 T2 | 19-08-2004 |
| | | EP 1208135 A1 | 29-05-2002 |
| | | ES 2208372 T3 | 16-06-2004 |
| | | MX PA02000769 A | 22-07-2002 |
| | | US 6590066 B1 | 08-07-2003 |
| | | WO 0107504 A1 | 01-02-2001 |
| US 2017058146 A1 | 02-03-2017 | CN 106029729 A | 12-10-2016 |
| | | EP 3110869 A1 | 04-01-2017 |
| | | US 2017058146 A1 | 02-03-2017 |
| | | WO 2015130502 A1 | 03-09-2015 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0403921 A
- EP 0639628 A
- EP 0667362 A
- EP 0689881 A
- US 5214086 A
- EP 0699696 A
- EP 0596360 A
- EP 0893458 A
- DE 19701835
- EP 0470461 A
- WO 15130501 A
- WO 15130502 A
- US 5243012 A
- DE 102006002153
- WO 2018074884 A
- WO 2018074885 A
- WO 05058996 A
- WO 9422968 A
- EP 0276501 A
- EP 0249201 A
- WO 9712945 A


### In der Beschreibung aufgeführte Nicht-Patentliteratur


- *Hauben Weyl, Meth. d. Org. Chemie,* 1957, vol. 11/1, 272
- *Usp. Khim.,* 1969, vol. 38, 1933
- **H. KITTEL.** Lehrbuch der Lacke und Beschichtungen, Band II, Pigmente, Füllstoffe, Farbstoffe. Verlag W.A. Colomb in der Heenemann GmbH, 1974, vol. II, 17-265
- **A. VALET.** Lichtschutzmittel für Lacke. Vincentz Verlag, 1996
- **H. KITTEL.** Lehrbuch der Lacke und Beschichtungen, Band III, Lösemittel, Weichmacher, Additive, Zwischenprodukte. Verlag W.A. Colomb in der Heenemann GmbH, 1976, vol. III, 237-398